# EUROPEAN PATENT SPECIFICATION

(11) **EP 3 421 505 B1**
(45) Date of publication and mention of the grant of the patent: **10.03.2021**
(21) Application number: 16891640.1
(22) Date of filing: 30.11.2016
(51) Int. Cl.: C09D 11/101, C08F 2/48, B41J 2/01, B41M 5/00, C08F 30/02, C09D 11/38, C09D 11/322

(54) **WATER-BASED CURABLE COMPOSITION AND WATER-SOLUBLE PHOTOPOLYMERIZATION INITIATOR**
HÄRTBARE ZUSAMMENSETZUNG AUF WASSERBASIS UND WASSERLÖSLICHER FOTOPOLYMERISATIONSINITIATOR
COMPOSITION DURCISSABLE AQUEUSE ET INITIATEUR DE PHOTOPOLYMÉRISATION HYDROSOLUBLE

(30) Priority: 25.02.2016 JP 2016034653
(43) Date of publication of application: 02.01.2019
(73) Proprietor: FUJIFILM Corporation, Tokyo 106-8620 (JP)
(72) Inventor: YOKOI, Kazuhiro, Ashigarakami-gun Kanagawa 258-8577 (JP); TSUYAMA, Hiroaki, Ashigarakami-gun Kanagawa 258-8577 (JP)
(74) Representative: Klunker IP Patentanwälte PartG mbB
(86) International application number: PCT/JP2016/085652
(87) International publication number: WO 2017/145484

(56) References cited:
- EP-A1- 2 902 456
- EP-A1- 3 378 875
- WO-A1-2014/016567
- JP-A- 2002 539 297
- JP-A- 2005 307 199
- JP-A- 2005 529 167
- JP-A- 2007 272 106
- JP-A- 2007 277 380
- JP-A- 2012 532 238
- JP-A- 2014 070 104
- US-A1- 2006 004 116
- US-A1- 2014 362 150
- ZHONG LIAN ET AL: "Pd-catalyzed carbonylative access to aroyl phosphonates from (hetero)aryl bromides", CHEMICAL COMMUNICATIONS, vol. 51, no. 37, 1 April 2015 (2015-04-01) , pages 7831-7834, XP055505927, ISSN: 1359-7345, DOI: 10.1039/C5CC02085A

## Description

The present disclosure relates to an aqueous curable composition and a water-soluble photopolymerization initiator.

Polymerizable compositions normally contain a polymerizable compound and a polymerization initiator. An acylphosphine oxide compound is known as a polymerization initiator such as a photopolymerization initiator that generates polymerization initiation species through irradiation with active energy rays such as ultraviolet rays.

An example of known acylphosphine oxide compounds is a compound disclosed in JP2014-185319A.

An example of known polymerization initiators is a compound disclosed in JP2012-513998A.

An example of known ink compositions is an ink composition disclosed in JP2013-18846A.

It is an object of one embodiment of the present invention to provide an aqueous curable composition that has high sensitivity and provides a cured film with high safety.

It is an object of another embodiment of the present invention to provide a novel water-soluble photopolymerization initiator.

The above objects have been achieved by means described in <1> or <11>. They are described below together with preferred embodiments <2> to <10> and <12>.
<1> An aqueous curable composition includes a water-soluble photopolymerization initiator having a structure in which one or more carbonyl groups further directly bond to an aromatic ring of an aromatic acyl group that bonds to a phosphorus atom in an acylphosphine oxide structure; water; and a polymerizable compound.
<2> In the aqueous curable composition according to <1>, the water-soluble photopolymerization initiator has a nonionic group or an ionic group selected from the group consisting of an ammonium group, a sulfonic acid group, a carboxylic acid group, a phosphonic acid group, a phosphinic acid group, and salts thereof.
<3> In the aqueous curable composition according to <1> or <2>, the water-soluble photopolymerization initiator is a compound having a partial structure represented by formula 1 or formula 2 below. 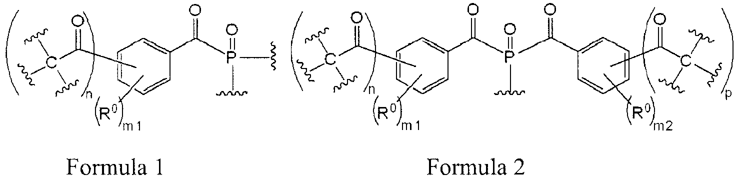
   In formula 1 and formula 2, R⁰ each independently represent an alkyl group, an aryl group, or an alkoxy group; m1 each independently represent an integer of 0 to 4; m2 represents an integer of 0 to 5; n each independently represent an integer of 1 to 3; p represents an integer of 0 to 3; and wavy lines each represent a bonding position with another structure.
<4> In the aqueous curable composition according to any one of <1> to <3>, the water-soluble photopolymerization initiator is a compound represented by formula 1-1 or formula 2-1 below. 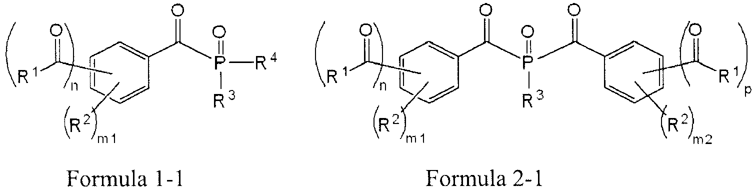
   In formula 1-1 and formula 2-1, R¹ each independently represent a group that has one or more groups selected from the group consisting of -⁺N(R)₄, -SO₃⁻, -COO⁻, -PO₃²⁻, and an alkylene oxide group -{(CH₂)ₓO}_{y}- and that has a carbon atom bonding to a carbonyl group in formula 1-1 or formula 2-1; R represents a hydrogen atom, an alkyl group, a phenyl group, or an aralkyl group; x represents an integer of 2 to 6; y represents an integer of 3 to 500; R² each independently represent an alkyl group, an aryl group, or an alkoxy group; m1 each independently represent an integer of 0 to 4; m2 represents an integer of 0 to 5; n each independently represent an integer of 1 to 3; and p represents an integer of 0 to 3.
<5> In the aqueous curable composition according to any one of <1> to <4>, the water-soluble photopolymerization initiator is a compound represented by formula 1-2 or formula 2-2 below. 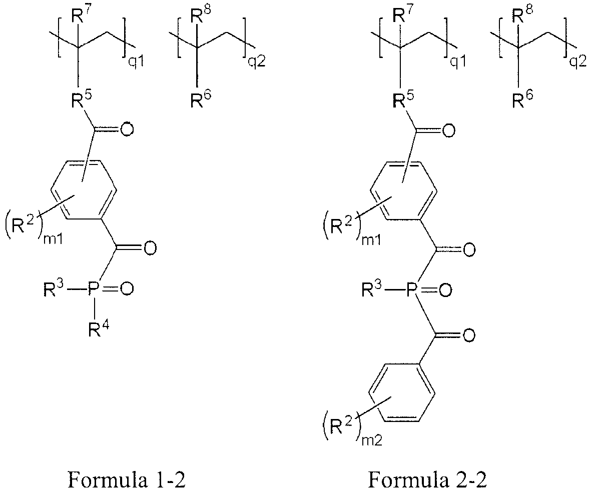
   In formula 1-2 and formula 2-2, R² to R⁴ each independently represent an alkyl group, an aryl group, or an alkoxy group; R⁵ each independently represent a single bond or a divalent linking group that links to a polymer main chain and has a carbon atom bonding to a carbonyl group in formula 1-2 or formula 2-2; R⁶ each independently represent a group having one or more groups selected from the group consisting of -⁺N(R)₄, -SO₃⁻, -COO⁻, -PO₃²⁻, and an alkylene oxide group -{(CH₂)ₓO}_{y}-; R represents a hydrogen atom, an alkyl group, a phenyl group, or an aralkyl group; R⁷ and R⁸ each independently represent a hydrogen atom or an alkyl group; x represents an integer of 2 to 6; y represents an integer of 3 to 500; m1 each independently represent an integer of 0 to 4; m2 represents an integer of 0 to 5; and q1 and q2 represent a molar ratio.
<6> In the aqueous curable composition according to any one of <1> to <5>, a content of the water-soluble photopolymerization initiator is 0.1 to 40.0 mass% relative to a total mass of the polymerizable compound included in the aqueous curable composition.
<7> In the aqueous curable composition according to any one of <1> to <6>, a content of the water is 19 to 90 mass% relative to a total mass of the aqueous curable composition.
<8> In the aqueous curable composition according to any one of <1> to <7>, the polymerizable compound is a water-soluble compound.
<9> The aqueous curable composition according to any one of <1> to <8> further includes a colorant.
<10> In the aqueous curable composition according to any one of <1> to <9>, the aqueous curable composition is an ink jet aqueous ink composition.
<11> A water-soluble photopolymerization initiator is a compound represented by formula 1-1 or formula 2-1 below. 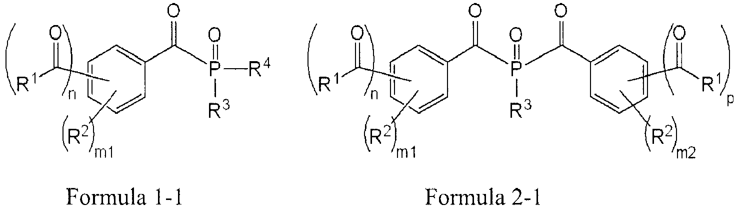
   In formula 1-1 and formula 2-1, R¹ each independently represent a group that has one or more groups selected from the group consisting of -⁺N(R)₄, -SO₃⁻, -COO⁻, -PO₃²⁻, and an alkylene oxide group -{(CH₂)ₓO}_{y}- and that has a carbon atom bonding to a carbonyl group in formula 1-1 or formula 2-1; R represents a hydrogen atom, an alkyl group, a phenyl group, or an aralkyl group; x represents an integer of 2 to 6; y represents an integer of 3 to 500; R² each independently represent an alkyl group, an aryl group, or an alkoxy group; m1 each independently represent an integer of 0 to 4; m2 represents an integer of 0 to 5; n each independently represent an integer of 1 to 3; and p represents an integer of 0 to 3.
<12> In the water-soluble photopolymerization initiator according to <11>, the water-soluble photopolymerization initiator is a compound represented by formula 1-2, formula 2-2, formula 1-3, or formula 2-3 below.

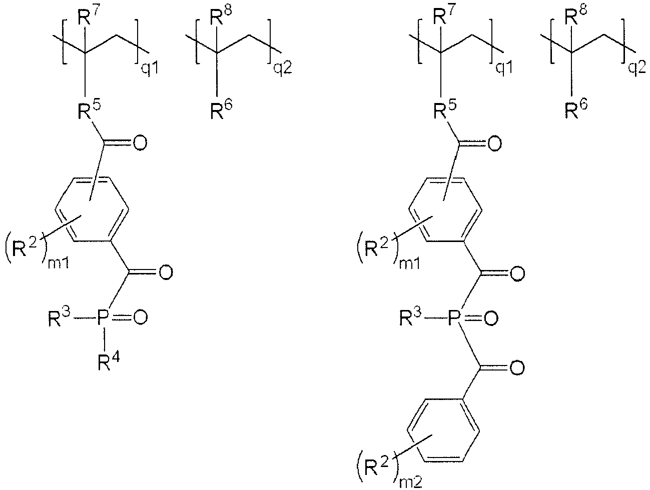

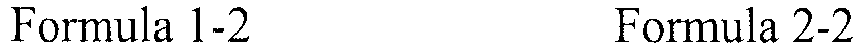

In formula 1-2 and formula 2-2, R² to R⁴ each independently represent an alkyl group, an aryl group, or an alkoxy group; R⁵ each independently represent a single bond or a divalent linking group that links to a polymer main chain and has a carbon atom bonding to a carbonyl group in formula 1-2 or formula 2-2; R⁶ each independently represent a group having one or more groups selected from the group consisting of -⁺N(R)₄, -SO₃⁻, -COO⁻, -PO₃²⁻, and an alkylene oxide group -{(CH₂)ₓO}_{y}-; R represents a hydrogen atom, an alkyl group, a phenyl group, or an aralkyl group; R⁷ and R⁸ each independently represent a hydrogen atom or an alkyl group; x represents an integer of 2 to 6; y represents an integer of 3 to 500; m1 each independently represent an integer of 0 to 4; m2 represents an integer of 0 to 5; and q1 and q2 represent a molar ratio.

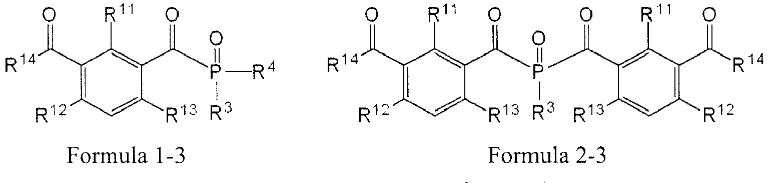

In formula 1-3 and formula 2-3, R³ and R⁴ each independently represent an alkyl group, an aryl group, or an alkoxy group; R¹¹ to R¹³ each independently represent an alkyl group having 1 to 8 carbon atoms, an aryl group having 6 to 20 carbon atoms, or an alkoxy group having 1 to 4 carbon atoms; and R¹⁴ each independently represent a group represented by formula R¹-1 below.

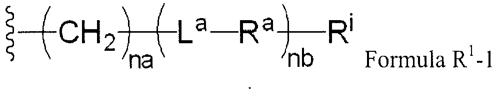

In formula R¹-1, na represents 1 or 2; nb represents 0 or 1; L^{a} represents an ether bond, an ester bond, or a thioether bond; R^{a} represents an alkylene group having 1 to 10 carbon atoms; Rⁱ represents a group having a group selected from the group consisting of - ⁺N(R)₄, -SO₃⁻, -COO⁻, -PO₃²⁻, and -NR-CH₂-COO⁻ and a counterion or an alkylene oxide group -{O(CH₂)ₓ}_{y}-R^{t}; R^{t} represents a hydroxy group or an alkoxy group; and wavy lines each represent a bonding position with a carbonyl group in formula 1-3 or formula 2-3.

According to one embodiment of the present invention, an aqueous curable composition that has high sensitivity and provides a cured film with high safety can be provided.

According to another embodiment of the present invention, a novel water-soluble photopolymerization initiator can be provided.

### BRIEF DESCRIPTION OF THE DRAWINGS

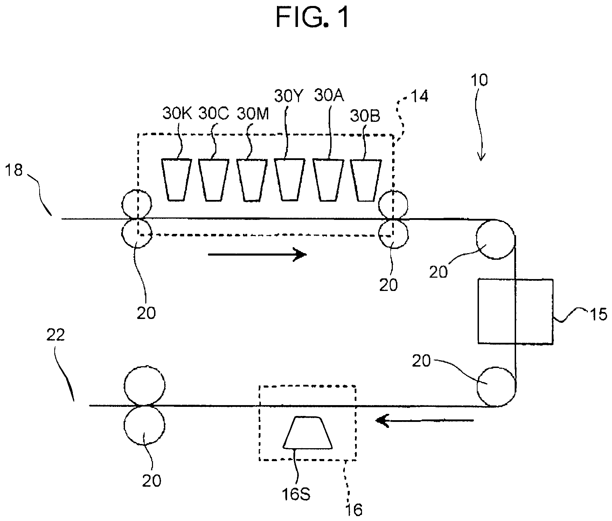

FIG. 1 schematically illustrates an ink jet recording apparatus that has been used for forming an image in Examples.

Hereafter, the present disclosure will be described in detail.

In this specification, the expression "xx to yy" refers to a numerical range including xx and yy.

For example, the term "(meth)acrylate" refers to "acrylate and/or methacrylate", and the same applies hereafter.

Hydrocarbon groups such as an alkyl group, an aryl group, an alkylene group, and an arylene group in the present disclosure may have a branched structure or a ring structure unless otherwise specified.

In the present disclosure, "mass%" and "wt%" have the same meaning and "parts by mass" and "parts by weight" have the same meaning.

The weight-average molecular weight (Mw) in the present disclosure is a molecular weight in terms of standard polystyrene unless otherwise specified. The molecular weight is determined by performing measurement with a gel permeation chromatography (GPC) system that uses TSKgel GMHxL, TSKgel G4000HxL, and TSKgel G2000HxL (trade name, each manufactured by Tosoh Corporation) as columns and N-methylpyrrolidone (NMP) as a solvent and performing detection with a differential refractometer.

In the present disclosure, a combination of two or more preferred embodiments is a more preferred embodiment.

Hereafter, the present disclosure will be described in detail.

### Aqueous curable composition

An aqueous curable composition according to the present disclosure includes a water-soluble photopolymerization initiator (hereafter also referred to as a "particular polymerization initiator") having a structure in which one or more carbonyl groups further directly bond to an aromatic ring of an aromatic acyl group that bonds to a phosphorus atom in an acylphosphine oxide structure, water, and a polymerizable compound.

An acylphosphine oxide compound is decomposed by active energy rays, and polymerization initiation species such as radicals are generated.

As a result of thorough studies conducted by the present inventors, they have found that when an aqueous curable composition includes a water-soluble photopolymerization initiator having a structure in which one or more carbonyl groups further directly bond an aromatic ring of an aromatic acyl group that bonds to a phosphorus atom in an acylphosphine oxide structure, the aqueous curable composition has high sensitivity and provides a cured film with high safety. Although the detailed mechanism is unclear, the reason for this is assumed to be as follows. The photolysis yield in an acylphosphine oxide structure is improved because of an optical or electronic influence caused by substitution of an acyl group, and the reactivity with a curable component is also improved. This reduces the amount of components that oozes out of a cured film to be obtained (migration), and thus the safety is improved.

The water-soluble photopolymerization initiator having a structure in which one or more carbonyl groups further directly bond to an aromatic ring of an aromatic acyl group that bonds to a phosphorus atom in an acylphosphine oxide structure is a novel compound.

The pH of the aqueous curable composition according to the present disclosure is preferably 4 to 9, more preferably 5 to 8, and particularly preferably 5 to 7.5 from the viewpoint of storage stability of the particular polymerization initiator.

The aqueous curable composition according to the present disclosure is an ink composition that is curable with active energy rays. The term "active energy rays" refers to radiations capable of imparting energy that generates initiation species in the aqueous curable composition through their irradiation. Examples of the active energy rays include α-rays, γ-rays, X-rays, ultraviolet rays, visible rays, and electron beams. In particular, ultraviolet rays and electron beams are preferred and ultraviolet rays are further preferred from the viewpoint of curing sensitivity and availability of an apparatus.

The aqueous curable composition according to the present disclosure can be widely used for, for example, ink compositions, dental materials, protectants or colorants (nail paints) for nails, paints, adhesives, pressure sensitive adhesives, functional coating agents, various films, optical materials, materials for printing plates, semiconductor materials, recording materials, tissue culture dishes, paper additives, medical materials, plastics, humectants, water absorbents, and hydrophilic members.

More specifically, the aqueous curable composition can be used for, for example, ink compositions, dental materials, nail paints, antireflection layers for various films, undercoat adhesives for various films, coating layers for various films, resists, lithographic plates, color filters, coating agents for endoscopes, ion exchange membranes, reverse osmosis membranes, conductive coating films, medical adhesives, proton conductive films, micropore films, water-absorbing gels, gels for cosmetics, medical gels, and ionic gels.

In particular, the aqueous curable composition can be suitably used for ink compositions, dental materials, or nail paints, can be more suitably used for ink compositions, and can be particularly suitably used for ink jet recording ink compositions (also referred to as "ink jet ink compositions").

### Particular polymerization initiator

The aqueous curable composition according to the present disclosure includes a water-soluble photopolymerization initiator (particular polymerization initiator) having a structure in which one or more carbonyl groups further directly bond to an aromatic ring of an aromatic acyl group that bonds to a phosphorus atom in an acylphosphine oxide structure.

The particular polymerization initiator is a water-soluble photopolymerization initiator and preferably has a water-soluble group.

The water-soluble group is preferably an ionic group or a nonionic group, more preferably an ionic group selected from the group consisting of an ammonium group, a sulfonic acid group, a carboxylic acid group, a phosphonic acid group, a phosphinic acid group, and salts thereof or a nonionic group, further preferably an ionic group selected from the group consisting of an ammonium group, a sulfonic acid group, a carboxylic acid group, a phosphonic acid group, a phosphinic acid group, and salts thereof, and particularly preferably an ionic group selected from the group consisting of an ammonium group, a sulfonic acid group, a carboxylic acid group, and salts thereof. In this case, sufficient water solubility is achieved, and higher sensitivity and higher safety of a cured film to be obtained are achieved.

The nonionic group is preferably a group having a polyalkyleneoxy structure and more preferably a group having a polyethyleneoxy structure or a group having a poly(ethyleneoxy/propyleneoxy) copolymer structure.

Specifically, the water-soluble group is preferably a group selected from the group consisting of -⁺N(R)₄, -SO₃⁻, -COO⁻, -PO₃²⁻, and an alkylene oxide group -{(CH₂)ₓO}_{y}-, more preferably a group selected from the group consisting of -⁺N(R)₄, -SO₃⁻, -COO⁻, and -PO₃²⁻, and particularly preferably a group selected from the group consisting of -SO₃⁻ and -COO⁻. In this case, sufficient water solubility is achieved, and higher sensitivity and higher safety of a cured film to be obtained are achieved.

R represents a hydrogen atom, an alkyl group, an aryl group, or an aralkyl group, preferably an alkyl group having 1 to 8 carbon atoms or a benzyl group, more preferably an alkyl group having 1 to 8 carbon atoms, and particularly preferably an alkyl group having 1 to 4 carbon atoms.

The counteranion of -⁺N(R)₄ is not particularly limited and may be a monovalent anion or a di- or higher valent anion as long as electroneutrality is achieved. The counteranion is preferably a halide ion or a carboxylate ion, more preferably a chloride ion, a bromide ion, an iodide ion, or a (meth)acrylate ion, and particularly preferably a chloride ion, a bromide ion, or an iodide ion. In this case, higher sensitivity and higher safety of a cured film to be obtained are achieved.

The countercation of -SO₃⁻, -COO⁻, and -PO₃²⁻ is not particularly limited and may be a monovalent cation or a di- or higher valent cation as long as electroneutrality is achieved. The countercation is preferably a hydrogen ion, an alkali metal ion, or an alkaline-earth metal ion, more preferably an alkali metal ion, and particularly preferably a sodium ion or a potassium ion. In this case, higher sensitivity and higher safety of a cured film to be obtained are achieved.

The particular polymerization initiator may have only one water-soluble group or may have two or more water-soluble groups.

Herein, the compound having "water solubility" in the present disclosure is a compound that is soluble in water at 25°C in an amount of 0.5 mass% or more.

The particular polymerization initiator is preferably a compound having a partial structure represented by formula 1 or formula 2 below.

The particular polymerization initiator having a partial structure represented by formula 1 or formula 2 may be a compound having only one partial structure represented by formula 1 or formula 2 below or a compound having two or more partial structures represented by formula 1 or formula 2 below.

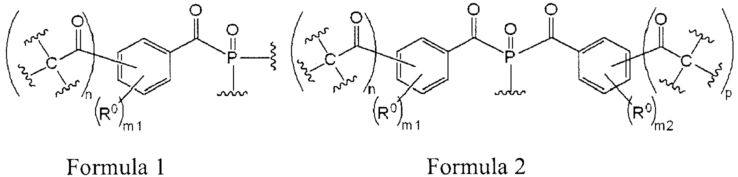

In formula 1 and formula 2, R⁰ each independently represent an alkyl group, an aryl group, or an alkoxy group, m1 each independently represent an integer of 0 to 4, m2 represents an integer of 0 to 5, n each independently represent an integer of 1 to 3, p represents an integer of 0 to 3, and wavy lines each represent a bonding position with another structure.

In formula 1 and formula 2, R° preferably each independently represent an alkyl group having 1 to 8 carbon atoms, an aryl group having 6 to 20 carbon atoms, or an alkoxy group having 1 to 4 carbon atoms, more preferably an alkyl group having 1 to 8 carbon atoms or an alkoxy group having 1 to 4 carbon atoms, further preferably an alkyl group having 1 to 8 carbon atoms, particularly preferably an alkyl group having 1 to 4 carbon atoms, and most preferably a methyl group. In this case, higher sensitivity is achieved, high stability of a compound is achieved, and furthermore ease of handling and a high yield during synthesis are achieved.

In formula 1 and formula 2, m1 preferably each independently represent an integer of 0 to 3, more preferably 1 to 3, and particularly preferably 3. In this case, higher sensitivity is achieved, high stability of a compound is achieved, and furthermore ease of handling and a high yield during synthesis are achieved.

In formula 2, m2 preferably represents an integer of 0 to 3, more preferably 1 to 3, and particularly preferably 3. In this case, higher sensitivity is achieved, high stability of a compound is achieved, and furthermore ease of handling and a high yield during synthesis are achieved.

In formula 1 and formula 2, n preferably each independently represent 1 or 2 and more preferably 1. In this case, higher sensitivity is achieved and high stability of a compound is achieved.

In formula 1 and formula 2, the bonding position of wavy line-CO- on a benzene ring is not particularly limited, but is preferably a meta position relative to the bonding position of a carbonyl group that bonds to a phosphorus atom. In this case, better decomposition properties and higher sensitivity are achieved, high stability of a compound is achieved, and ease of handling and a high yield during synthesis are achieved.

In formula 2, p preferably represents an integer of 0 to 2, more preferably 0 or 1, and particularly preferably 1. In this case, higher sensitivity is achieved and high stability of a compound is achieved.

In formula 1 and formula 2, the carbon atom that bonds to another structure at a wavy line may have any sp hybridized orbital. That is, the carbon atom may be a carbon atom (sp hybridized orbital) that constitutes an alkynyl group such as an ethynyl group, a carbon atom (sp2 hybridized orbital) that constitutes an alkenyl group such as a vinyl group, or a carbon atom (sp3 hybridized orbital) that constitutes an alkyl group. However, the carbon atom is preferably a carbon atom (sp2 hybridized orbital) that constitutes an alkenyl group such as a vinyl group or a carbon atom (sp3 hybridized orbital) that constitutes an alkyl group and more preferably a carbon atom (sp3 hybridized orbital) that constitutes an alkyl group. In this case, good decomposition properties are achieved, high ink jet discharge performance is achieved when the aqueous curable composition is used as an ink jet ink composition, and ease of handling and a high yield during synthesis are achieved.

The photopolymerization initiator according to the present disclosure is preferably a compound represented by formula 1-1 or formula 2-1 below.

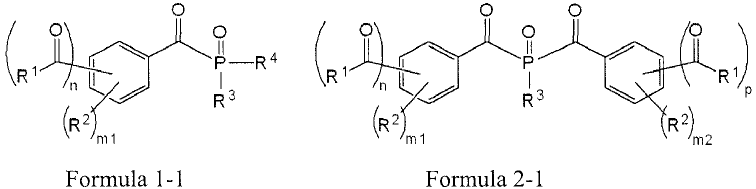

In formula 1-1 and formula 2-1, R¹ each independently represent a group that has one or more groups selected from the group consisting of -⁺N(R)₄, -SO₃⁻, -COO⁻, -PO₃²⁻, and an alkylene oxide group -{(CH₂)ₓO}_{y}- and that has a carbon atom bonding to a carbonyl group in formula 1-1 or formula 2-1; R represents a hydrogen atom, an alkyl group, a phenyl group, or an aralkyl group; x represents an integer of 2 to 6; y represents an integer of 3 to 500; R² each independently represent an alkyl group, an aryl group, or an alkoxy group; m1 each independently represent an integer of 0 to 4; m2 represents an integer of 0 to 5; n each independently represent an integer of 1 to 3; and p represents an integer of 0 to 3.

R¹ in formula 1-1 and formula 2-1 will be described in detail later.

In formula 1-1 and formula 2-1, R² preferably each independently represent an alkyl group having 1 to 8 carbon atoms, an aryl group having 6 to 20 carbon atoms, or an alkoxy group having 1 to 4 carbon atoms, more preferably an alkyl group having 1 to 8 carbon atoms or an alkoxy group having 1 to 4 carbon atoms, further preferably an alkyl group having 1 to 8 carbon atoms, particularly preferably an alkyl group having 1 to 4 carbon atoms, and most preferably a methyl group. In this case, higher sensitivity is achieved, high stability of a compound is achieved, and ease of handling and a high yield during synthesis are achieved.

In formula 1-1 and formula 2-1, R³ and R⁴ preferably each independently represent an alkyl group having 1 to 8 carbon atoms, an aryl group having 6 to 20 carbon atoms, or an alkoxy group having 1 to 4 carbon atoms, more preferably an aryl group having 6 to 20 carbon atoms or an alkoxy group having 1 to 4 carbon atoms, further preferably an aryl group having 6 to 20 carbon atoms, particularly preferably an aryl group having 6 to 12 carbon atoms, and most preferably a phenyl group. In this case, higher sensitivity is achieved, high stability of a compound is achieved, and raw materials are easily available.

In formula 1-1 and formula 2-1, R preferably represents a hydrogen atom, an alkyl group having 1 to 8 carbon atoms, a phenyl group, or an aralkyl group having 7 to 14 carbon atoms, more preferably an alkyl group having 1 to 8 carbon atoms, a phenyl group, or an aralkyl group having 7 to 14 carbon atoms, further preferably an alkyl group having 1 to 8 carbon atoms, and particularly preferably an alkyl group having 1 to 4 carbon atoms.

In formula 1-1 and formula 2-1, m1, m2, n, and p have the same meaning as m1, m2, n, and p in formula 1 and formula 2, and preferred examples thereof are also the same.

In formula 1-1 and formula 2-1, x preferably represents 2 or 3 and more preferably 2.

In formula 1-1 and formula 2-1, y preferably represents an integer of 6 to 100, more preferably an integer of 8 to 50, and particularly preferably an integer of 8 to 15.

In formula 1-1 and formula 2-1, the bonding position of R¹-CO- on a benzene ring is not particularly limited, but is preferably a meta position relative to the bonding position of a carbonyl group that bonds to a phosphorus atom. In this case, better decomposition properties and higher sensitivity are achieved, high stability of a compound is achieved, and ease of handling and a high yield during synthesis are achieved.

In formula 1-1 and formula 2-1, R¹ preferably each independently represent a low molecular weight-type group or a polymer-type group. The low molecular weight-type group is a monovalent group that has one or more groups selected from the group consisting of - ⁺N(R)₄, -SO₃⁻, -COO⁻, -PO₃²⁻, and an alkylene oxide group -{(CH₂)ₓO}_{y}-, that has a carbon atom bonding to a carbonyl group in formula 1-1 or formula 2-1, and that has 2 to 60 carbon atoms. The polymer-type group is a group that has a polymer chain having one or more groups selected from the group consisting of -⁺N(R)₄, -SO₃⁻, -COO⁻, -PO₃²⁻, and an alkylene oxide group -{(CH₂)ₓO}_{y}- and that has a carbon atom bonding to a carbonyl group in formula 1-2 or formula 2-2.

Preferred examples of -⁺N(R)₄, -SO₃⁻, -COO⁻, -PO₃²⁻, and an alkylene oxide group - {(CH₂)ₓO}_{y}- are the same as those described in the water-soluble group.

In formula 1-1 and formula 2-1, when R¹ represents a group having a carbon atom bonding to a carbonyl group in formula 1-1 or formula 2-1, the carbon atom may have any sp hybridized orbital. That is, the carbon atom may be a carbon atom (sp hybridized orbital) that constitutes an alkynyl group such as an ethynyl group, a carbon atom (sp2 hybridized orbital) that constitutes an alkenyl group such as a vinyl group, or a carbon atom (sp3 hybridized orbital) that constitutes an alkyl group. However, the carbon atom is preferably a carbon atom (sp2 hybridized orbital) that constitutes an alkenyl group such as a vinyl group or a carbon atom (sp3 hybridized orbital) that constitutes an alkyl group and more preferably a carbon atom (sp3 hybridized orbital) that constitutes an alkyl group. In this case, good decomposition properties are achieved, high ink jet discharge performance is achieved when the aqueous curable composition is used as an ink jet ink composition, and ease of handling and a high yield during synthesis are achieved.

The monovalent group having 2 to 60 carbon atoms is preferably a monovalent hydrocarbon group in which the hydrocarbon chain may be partly substituted with a carbonyl group, an ester bond, an amide bond, an oxygen atom, NR', and/or a sulfur atom. R' represents a hydrogen atom, an alkyl group, an aryl group, or an aralkyl group and preferably represents an alkyl group.

The monovalent hydrocarbon group may be an aliphatic hydrocarbon group, an aromatic hydrocarbon group, or a group obtained by combining one or more aliphatic hydrocarbon groups and one or more aromatic hydrocarbon groups. The aliphatic hydrocarbon group may have an unsaturated bond.

The monovalent hydrocarbon group may further have a substituent. Examples of the substituent include halogen atoms, alkoxy groups, acyl groups, alkoxycarbonyl groups, amide groups, and acyloxy groups.

The monovalent hydrocarbon group in which the hydrocarbon chain may be partly substituted with a carbonyl group, an ester bond, an amide bond, an oxygen atom, NR', and/or a sulfur atom is preferably a monovalent hydrocarbon group in which the hydrocarbon chain may be partly substituted with a carbonyl group, an ester bond, an oxygen atom, and/or a sulfur atom. In this case, higher sensitivity is achieved.

The substitution with a carbonyl group, an ester bond, an amide bond, an oxygen atom, NR', and/or a sulfur atom in R¹ may be caused at a terminal of the hydrocarbon group different from the terminal that bonds to a carbonyl group in formula 1-1 or formula 2-1.

The monovalent group that has one or more groups selected from the group consisting of -⁺N(R)₄, -SO₃⁻, -COO⁻, -PO₃²⁻, and an alkylene oxide group -{(CH₂)ₓO}_{y}-, that has a carbon atom bonding to a carbonyl group in formula 1-1 or formula 2-1, and that has 2 to 60 carbon atoms, which is a preferred example of the low molecular weight-type group represented by R¹, is preferably a group represented by formula R¹-1 below.

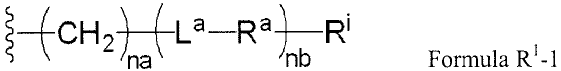

In formula R¹-1, na represents 1 or 2; nb represents 0 or 1; L^{a} represents an ether bond, an ester bond, or a thioether bond; R^{a} represents an alkylene group having 1 to 10 carbon atoms; R¹ represents a group having a group selected from the group consisting of - ⁺N(R)₄, -SO₃⁻, -COO⁻, -PO₃²⁻, and -NR-CH₂-COO⁻ and a counterion or an alkylene oxide group -{O(CH₂)ₓ}_{y}-R^{t}; R^{t} represents a hydroxy group or an alkoxy group; a wavy line represents a bonding position with a carbonyl group in formula 1-1 or formula 2-1.

In formula R¹ -1, L^{a} preferably represents an ether bond or an ester bond.

In formula R¹-1, R^{a} preferably represents an alkylene group having 2 to 8 carbon atoms.

In formula R¹-1, Rⁱ preferably represents a group having a group selected from the group consisting of -⁺N(R)₄, -SO₃⁻, -COO⁻, and -PO₃²⁻ and a counterion and more preferably a group having a group selected from the group consisting of -⁺N(R)₄, -SO₃⁻, and -COO⁻ and a counterion.

The group selected from the group consisting of -⁺N(R)₄, -SO₃⁻, -COO⁻, and -PO₃²⁻ in R¹ in formula 1-1 and formula 2-1 preferably has a counterion.

Preferred examples of the counterion include the above-described counteranions and countercations.

The group having a group selected from the group consisting of -⁺N(R)₄, -SO₃⁻, -COO⁻, and -PO₃²⁻ and a counterion is preferably -⁺N(R)₄X⁻, -SO₃⁻M⁺, -COO⁻M⁺, or -PO₃²⁻(M⁺)₂. X⁻ represents a counteranion and may be a monovalent anion or a di- or higher valent anion as long as electroneutrality is achieved. However, the counteranion is preferably a halide ion or a carboxylate ion, more preferably a chloride ion, a bromide ion, an iodide ion, or a (meth)acrylate ion, and particularly preferably a chloride ion, a bromide ion, or an iodide ion.

M⁺ represents a countercation and may be a monovalent cation or a di- or higher valent cation as long as electroneutrality is achieved. However, the countercation is preferably an alkali metal ion or an alkaline-earth metal ion, more preferably an alkali metal ion, and particularly preferably a sodium ion or a potassium ion.

In formula 1-1 and formula 2-1, when R¹ represents a polymer-type group, that is, a group that has a polymer chain having one or more groups selected from the group consisting of -⁺N(R)₄, -SO₃⁻, -COO⁻, -PO₃²⁻, and an alkylene oxide group -{(CH₂)ₓO}_{y}- and that has a carbon atom bonding to a carbonyl group in formula 1-2 or formula 2-2, examples of a polymer structure constituting the polymer chain include a vinyl resin, a polyketone resin, a (meth)acrylic resin, a polyurethane resin, a polyester resin, a polycarbonate resin, an epoxy resin, a polyamide resin, a polyolefin resin, a styrene-(meth)acrylic resin, and a styrene resin. In particular, the polymer chain is preferably an acrylic resin chain.

When the particular polymerization initiator is a polymer-type initiator, the weight-average molecular weight (Mw) of the particular polymerization initiator is 2,000 or more, preferably 2,000 to 100,000, more preferably 2,500 to 50,000, and further preferably 3,000 to 15,000. In the above range, higher sensitivity is achieved and good water solubility and good curing properties are achieved.

In formula 1-1 and formula 2-1, R¹ represents a polymer-type group, the particular polymerization initiator is preferably a compound represented by formula 1-2 or formula 2-2 below.

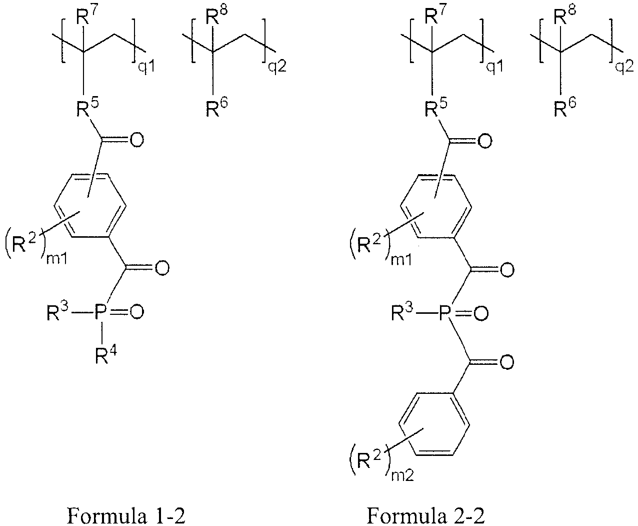

In formula 1-2 and formula 2-2, R² to R⁴ each independently represent an alkyl group, an aryl group, or an alkoxy group; R⁵ each independently represent a single bond or a divalent linking group that links to a polymer main chain and has a carbon atom bonding to a carbonyl group in formula 1-2 or formula 2-2; R⁶ each independently represent a group having one or more groups selected from the group consisting of -⁺N(R)₄, -SO₃⁻, -COO⁻, -PO₃²⁻, and an alkylene oxide group -{(CH₂)ₓO}_{y}-; R represents a hydrogen atom, an alkyl group, a phenyl group, or an aralkyl group; R⁷ and R⁸ each independently represent a hydrogen atom or an alkyl group; x represents an integer of 2 to 6; y represents an integer of 3 to 500; m1 each independently represent an integer of 0 to 4; m2 represents an integer of 0 to 5; and q1 and q2 represent a molar ratio.

In formula 1-2 and formula 2-2, R² to R⁴, x, y, m1, m2, and R have the same meaning as R² to R⁴, x, y, m1, m2, and R in formula 1-1 and formula 2-1, and preferred examples thereof are also the same.

In formula 1-2 and formula 2-2, q1 and q2 represent a molar ratio. If q1 and q2 do not represent 0, q1 and q2 are not particularly limited, but preferably satisfies q1 ≥ q2, more preferably satisfies q1:q2 = 85 to 50:15 to 50, and particularly preferably satisfies q1:q2 = 80 to 60:20 to 40.

In formula 1-2 and formula 2-2, R⁵ preferably each independently represent a single bond or a divalent hydrocarbon group which has a carbon atom bonding to a carbonyl group in formula 1-2 or formula 2-2 and in which the hydrocarbon chain may be partly substituted with a carbonyl group, an ester bond, an amide bond, an oxygen atom, NR', and/or a sulfur atom, more preferably a single bond or a divalent hydrocarbon group which has a carbon atom bonding to a carbonyl group in formula 1-2 or formula 2-2 and in which the hydrocarbon chain may be partly substituted with a carbonyl group, an ester bond, and/or an oxygen atom, and particularly preferably a single bond. R' represents a hydrogen atom, an alkyl group, an aryl group, or an aralkyl group and preferably represents an alkyl group.

In formula 1-2 and formula 2-2, R⁶ preferably each independently represent a monovalent hydrocarbon group which has, at its terminal, a group having a group selected from the group consisting of -⁺N(R)₄, -SO₃⁻, -COO⁻, -PO₃²⁻, and an alkylene oxide group - {(CH₂)ₓO}_{y}- and a counterion and in which the hydrocarbon chain may be partly substituted with a carbonyl group, an ester bond, an amide bond, an oxygen atom, NR', and/or a sulfur atom, more preferably a monovalent hydrocarbon group which has, at its terminal, a group having a group selected from the group consisting of -⁺N(R)₄, -SO₃⁻, -COO⁻, -PO₃²⁻, and an alkylene oxide group -{(CH₂)ₓO}_{y}- and a counterion and in which the hydrocarbon chain may be particularly substituted with a carbonyl group, an ester bond, an oxygen atom, and/or a sulfur atom, and particularly preferably a group represented by formula R⁶-1 below.

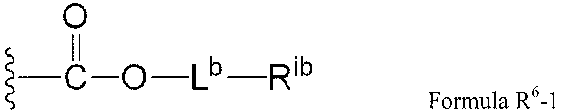

In formula R⁶-1, L^{b} represents a single bond or an alkylene group, R^{ib} represents a group having a group selected from the group consisting of -⁺N(R)₄, -SO₃⁻, -COO⁻, -PO₃²⁻, and -NR-CH₂-COO⁻ and a counterion or an alkylene oxide group -{(CH₂)ₓO}_{y}-R^{tb}, R^{tb} represents a hydrogen atom or an alkyl group, and a wavy line represents a bonding position with a polymer chain in formula 1-2 and formula 2-2.

In formula R⁶-1, x and y have the same meaning as x and y in formula 1-1 and formula 2-1, and preferred examples thereof are also the same. In formula R⁶-1, L^{b} preferably represents a single bond or an alkylene group having 2 to 8 carbon atoms and more preferably represents a single bond or an alkylene group having 2 to 4 carbon atoms.

In formula R⁶-1, R^{ib} preferably represents a group having -⁺N(R)₄ and a counterion or an alkylene oxide group -{(CH₂)ₓO}_{y}-R^{tb} and more preferably represents a group having -⁺N(R)₄ and a counterion.

In formula R⁶-1, R^{tb} preferably represents an alkyl group having 1 to 8 carbon atoms and more preferably represents a methyl group.

In formula 1-2 and formula 2-2, R⁷ and R⁸ preferably each independently represent a hydrogen atom or an alkyl group having 1 to 4 carbon atoms and more preferably represent a hydrogen atom or a methyl group from the viewpoint of polymerizability during synthesis.

The compound represented by formula 1-2 and formula 2-2 may have a structural unit other than the above-described structural units.

The other structural unit is not particularly limited and the compound may have any structural unit if desired as long as the water solubility and the photopolymerization initiation ability are not affected.

The other structural unit is not particularly limited, but a compound having an ethylenically unsaturated bond is used. Examples of the compound having an ethylenically unsaturated bond include unsaturated carboxylic acids (e.g., acrylic acid, methacrylic acid, itaconic acid, crotonic acid, isocrotonic acid, and maleic acid), esters thereof, and amides thereof. Preferably, an ester of an unsaturated carboxylic acid and an aliphatic polyhydric alcohol compound or an amide of an unsaturated carboxylic acid and an aliphatic polyvalent amine compound is used. Furthermore, for example, an addition reaction product of an ester or amide of an unsaturated carboxylic acid having a nucleophilic substituent such as a hydroxy group, an amino group, or a mercapto group and a monofunctional or polyfunctional isocyanate or epoxy and a dehydration condensation reaction product of the ester or amide of an unsaturated carboxylic acid having a nucleophilic substituent and a monofunctional or polyfunctional carboxylic acid are also suitably used. Furthermore, an addition reaction product of an ester or amide of an unsaturated carboxylic acid having an electrophilic substituent such as an isocyanate group or an epoxy group and a monofunctional or polyfunctional alcohol, amine, or thiol is suitably used. A substitution reaction product of an ester or amide of an unsaturated carboxylic acid having a leaving substituent such as a halogen atom or a tosyloxy group and a monofunctional or polyfunctional alcohol, amine, or thiol is also suitably used. Alternatively, compounds obtained by replacing the above-described unsaturated carboxylic acid with an unsaturated phosphonic acid, styrene, or the like may also be used.

A polymerizable compound described later can also be used. In particular, a monofunctional (meth)acrylate compound described later is suitably used.

The content of the other structural unit in the compound represented by formula 1-2 and formula 2-2 is preferably less than 10 mass% and more preferably less than 5 mass%. The compound represented by formula 1-2 and formula 2-2 is particularly preferably a compound that does not have the other structural unit.

The terminal group of the polymer chain in the compound represented by formula 1-2 and formula 2-2 is not particularly limited. The terminal group is, for example, a hydrogen atom, an alkyl group, an alkoxy group, an alkylthio group, and/or a hydroxy group, though depending on the thermal polymerization initiator used and the conditions of quenching and the like.

When the particular polymerization initiator is a low molecular weight-type initiator, the particular polymerization initiator is particularly preferably a compound represented by formula 1-3 or formula 2-3 below.

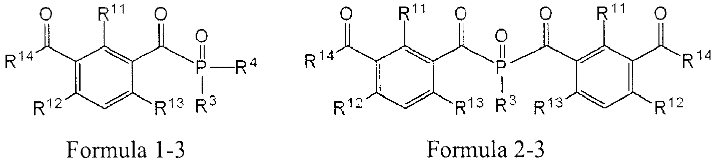

In formula 1-3 and formula 2-3, R³ and R⁴ each independently represent an alkyl group, an aryl group, or an alkoxy group; R¹¹ to R¹³ each independently represent an alkyl group having 1 to 8 carbon atoms, an aryl group having 6 to 20 carbon atoms, or an alkoxy group having 1 to 4 carbon atoms; and R¹⁴ each independently represent a group represented by formula R¹-1 above.

In formula 1-3 and formula 2-3, the group represented by formula R¹-1 in R¹⁴ has the same meaning as the group represented by formula R¹-1 above, and preferred examples thereof are also the same.

In formula 1-3 and formula 2-3, R³ and R⁴ have the same meaning as R³ and R⁴ in formula 1-1 and formula 2-1 above, and preferred examples thereof are also the same.

In formula 1-3 and formula 2-3, R¹¹ to R¹³ preferably each independently represent an alkyl group having 1 to 8 carbon atoms or an alkoxy group having 1 to 4 carbon atoms, more preferably an alkyl group having 1 to 8 carbon atoms, further preferably an alkyl group having 1 to 4 carbon atoms, and particularly preferably a methyl group. In this case, higher sensitivity is achieved, high stability of a compound is achieved, and ease of handling and a high yield during synthesis are achieved.

In formula 1-3 and formula 2-3, R¹¹ to R¹³ preferably represent the same group.

The molecular weight (or the weight-average molecular weight) of the particular polymerization initiator is preferably 300 or more, more preferably 400 to 100,000, and further preferably 500 to 15,000. In the above range, higher sensitivity is achieved and good water solubility and good curing properties are achieved.

The "acylphosphine oxide structure" in the present disclosure is a structure in which one oxo group and at least one acyl group directly bond to a pentavalent phosphorus atom and is preferably an acylphosphine oxide structure in formula 1 or formula 2 above.

Preferred examples of the particular polymerization initiator are shown below, but the particular polymerization initiator is not limited thereto. The value at the lower right of square brackets [] that each represent a structural unit in B-1 to B-5 is a molar ratio.

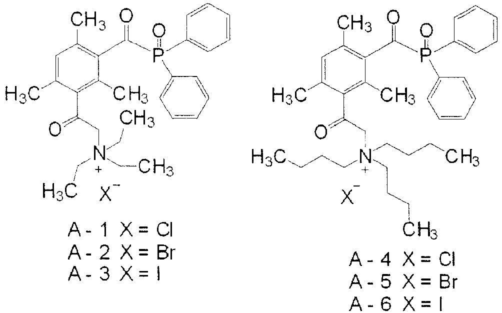

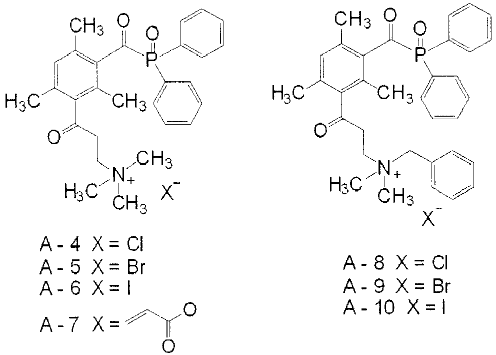

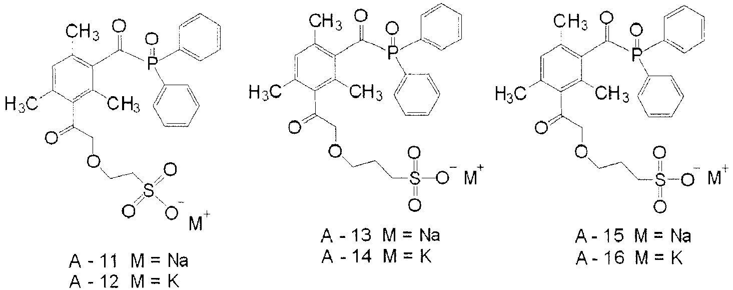

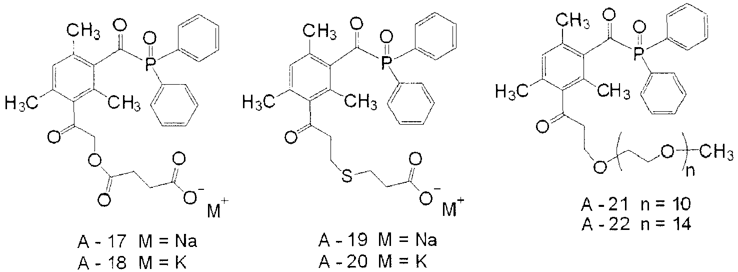

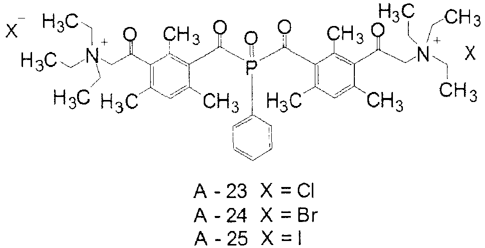

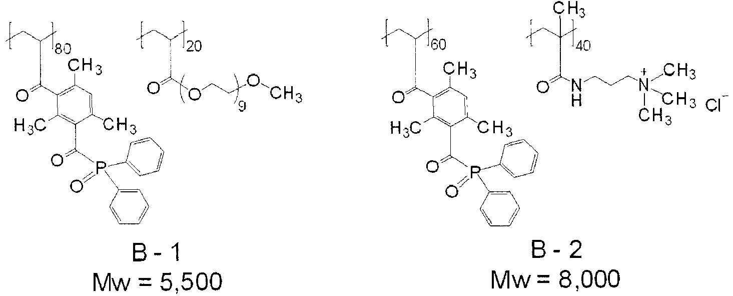

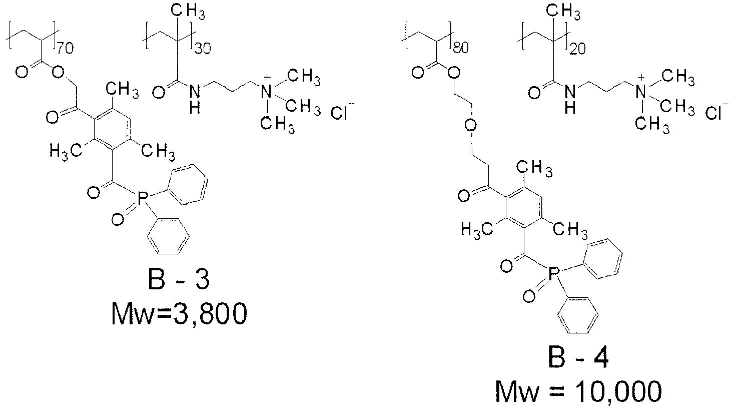

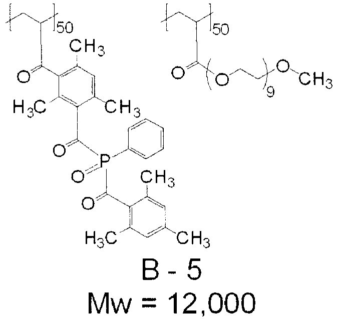

### Method for producing particular polymerization initiator

The method for producing a particular polymerization initiator is not particularly limited, but is preferably a method including a step 1 of reacting, in the presence of a Lewis acid, an acylphosphine oxide compound having one or more aromatic acyl groups that bond to a phosphorus atom with an acid halide or acid anhydride having a reactive group and a step 2 of reacting, with the reactive group, a compound that forms a water-soluble group as a result of reaction with the reactive group or a compound having a group that reacts with the reactive group and a water-soluble group.

By performing a Friedel-Crafts acylation reaction on the acylphosphine oxide compound using an acid halide or acid anhydride having a reactive group in the presence of a Lewis acid, the particular polymerization initiator can be easily produced with a high yield.

The acylphosphine oxide compound having one or more aromatic acyl groups that bond to a phosphorus atom may be appropriately selected in accordance with the desired particular polymerization initiator. The acylphosphine oxide compound is preferably a mono-aromatic acyldiarylphosphine oxide compound or a bis-aromatic acylmonoarylphosphine oxide compound.

The acid halide or acid anhydride having a reactive group is preferably an acid chloride having a reactive group in terms of reactivity. The acid halide or acid anhydride having a reactive group is preferably a carboxylic acid halide or carboxylic anhydride having a reactive group and more preferably a carboxylic acid chloride having a reactive group.

The reactive group is preferably a group that does not inhibit Friedel-Crafts acylation. The reactive group is preferably a halogen atom such as a chlorine atom.

A Lewis acid used in a Friedel-Crafts acylation reaction can be suitably used.

The Lewis acid used is preferably a zinc compound such as zinc chloride, zinc bromide, or zinc acetate; an aluminum compound such as aluminum chloride, aluminum bromide, or diethylaluminum chloride; an iron compound such as iron chloride or iron bromide; a bismuth compound such as bismuth(III) chloride; a boron compound such as boron trifluoride, boron trichloride, or tris(pentafluorophenyl)boron; a titanium compound such as titanium tetrachloride; a zirconium compound such as zirconium chloride; a tin compound such as tin tetrachloride or tin trichloride; an indium compound such as indium chloride; or a trifluoromethanesulfonic acid compound that is stable in water, such as copper(II) trifluoromethanesulfonate, lanthanum(III) trifluoromethanesulfonate, zinc(II) trifluoromethanesulfonate, silver trifluoromethanesulfonate, ytterbium(III) trifluoromethanesulfonate, scandium(III) trifluoromethanesulfonate, hafnium(IV) trifluoromethanesulfonate, or yttrium(III) trifluoromethanesulfonate or a hydrate thereof. The Lewis acid is more preferably an aluminum compound, an iron compound, a tin compound, or a zinc compound and particularly preferably an aluminum compound, an iron compound, or a zinc compound. In this case, high reactivity and high stability of a compound are achieved and raw materials are easily available.

The reaction temperature and the reaction time in the step 1 are not particularly limited and may be appropriately set in accordance with the progress of the reaction. The reaction temperature is preferably 0°C to 40°C.

In the step 1, a solvent is preferably used. Non-limiting examples of the solvent include halogen-based solvents and aliphatic hydrocarbon solvents. Among them, a halogen-based solvent is preferably used and dichloromethane is particularly preferably used.

The compound that forms a water-soluble group as a result of reaction with the reactive group and the compound having a group that reacts with the reactive group and a water-soluble group are not particularly limited. For example, when an ammonium group is formed, a tertiary amine can be suitably used and a trialkylamine can be particularly suitably used. When a sulfonic acid group, a carboxylic acid group, a phosphonic acid group, a phosphinic acid group, a salt thereof, or a nonionic group is formed, a compound having the foregoing group and a hydroxy group can be suitably used. Specific examples of the compound include sodium 2-hydroxyethanesulfonate and polyethylene glycol monomethyl ether.

The reaction temperature and the reaction time in the step 2 are not particularly limited and may be appropriately set in accordance with the compound used and the progress of the reaction.

In the step 2, a solvent is preferably used. The solvent is not particularly limited, but is preferably ethyl acetate, acetonitrile, or toluene.

The countercation or counteranion in the particular polymerization initiator can be converted into a desired counterion by a publicly known conversion method of counterions.

After the above-described steps, the particular polymerization initiator is preferably purified by a publicly known method such as column chromatography, thin-layer chromatography (TLC), recrystallization, or reprecipitation.

In the aqueous curable composition according to the present disclosure, only one particular polymerization initiator may be used or two or more particular polymerization initiators may be used in combination.

The content of the particular polymerization initiator in the aqueous curable composition according to the present disclosure is not particularly limited, but is preferably 0.1 to 40.0 mass%, more preferably 1.0 to 30.0 mass%, and particularly preferably 3.0 to 25.0 mass% relative to the total mass of the polymerizable compound included in the aqueous curable composition. In the above range, higher safety of a cured film to be obtained is achieved and good curing properties are achieved.

### Other polymerization initiators

The aqueous curable composition according to the present disclosure may include polymerization initiators other than the particular polymerization initiator as long as the advantages of the present disclosure are not impaired.

Examples of the other polymerization initiators include photopolymerization initiators other than the particular polymerization initiator and thermal polymerization initiators. The other polymerization initiators are preferably radical polymerization initiators or cationic polymerization initiators and particularly preferably radical polymerization initiators. For example, a polymerization initiator disclosed in JP2009-138172A can be used.

The other polymerization initiators may be used alone or in combination of two or more.

The total content of the other polymerization initiators is preferably 10 mass% or less, more preferably 5 mass% or less, and further preferably 1 mass% or less relative to the total amount of the polymerizable compound and is particularly preferably not contained. In the above range, the adverse effect on the safety of a cured film to be obtained can be suppressed to some degree.

The total content of the other polymerization initiators is preferably lower than the content of the particular polymerization initiator.

In the aqueous curable composition according to the present disclosure, the total content of the particular polymerization initiator and the other polymerization initiators is preferably 0.1 to 40.0 mass%, more preferably 1.0 to 30.0 mass%, and particularly preferably 3.0 to 25.0 mass% relative to the total mass of the polymerizable compound included in the aqueous curable composition.

### Water

The aqueous curable composition according to the present disclosure includes water.

Non-limiting examples of the water that can be used include tap water, well water, ion-exchanged water, and distilled water. The water is preferably water not containing ionic impurities, such as ion-exchanged water or distilled water.

The content of water in the aqueous curable composition according to the present disclosure is preferably 19 to 90 mass%, more preferably 29 to 85 mass%, and particularly preferably 37 to 80 mass% relative to the total mass of the aqueous curable composition.

### Polymerizable compound

The aqueous curable composition according to the present disclosure includes a polymerizable compound.

In the aqueous curable composition, the polymerizable compound may be dissolved or dispersed in water, but is preferably dissolved in water. That is, the polymerizable compound is preferably a water-soluble compound.

The polymerizable compound may be any compound that is cured through a polymerization reaction initiated by applying some type of energy. The polymerizable compound may be any of a monomer, an oligomer, and a polymer. In particular, the polymerizable compound is preferably a publicly known polymerizable monomer known as a radically polymerizable monomer whose polymerization reaction is initiated by radical polymerization initiation species.

The polymerizable compound is preferably an ethylenically unsaturated compound and more preferably a (meth)acrylamide compound.

For the purpose of controlling the reaction rate, the physical properties of a cured film, and the physical properties of a composition, one polymerizable compound may be used or a plurality of polymerizable compounds may be used as a mixture. The polymerizable compound may be a monofunctional compound or a polyfunctional compound. As the ratio of a monofunctional polymerizable compound increases, the flexibility of the cured product increases. As the ratio of a polyfunctional polymerizable compound increases, the curing properties tend to improve. Therefore, the ratio of the monofunctional polymerizable compound and the polyfunctional polymerizable compound is appropriately determined in accordance with the applications.

By using a plurality of polymerizable compounds as a mixture, various physical properties such as the viscosity of a curable composition, the solubility in a solvent, the hardness after curing, the stretchability, the adhesiveness, the refractive index, and the flexibility can be appropriately controlled.

More specifically, the viscosity of the aqueous curable composition can be controlled by combining a monomer having a low molecular weight and a monomer containing a small number of hydrogen-bonding functional groups. The solubility in a solvent can be controlled by combining monomers having polarities close to that of the solvent used. The hardness after curing can be controlled by combining a monomer having a high glass transition temperature (Tg) and a monomer containing a large number of polymerizable groups. The stretchability and the flexibility can be controlled by combining a monomer having a low glass transition temperature (Tg) and a monomer containing a small number of polymerizable groups.

The polymerizable compound preferably includes a compound having two or more ethylenically unsaturated groups and is more preferably a compound having two or more ethylenically unsaturated groups.

The ethylenically unsaturated group is preferably a (meth)acryloyl group or a vinyl group and more preferably a (meth)acryloyl group.

The polyfunctional compound having a (meth)acryloyl group is preferably a polyfunctional (meth)acrylate compound and/or a polyfunctional (meth)acrylamide compound and particularly preferably a polyfunctional (meth)acrylamide compound.

The polymerizable compound preferably includes a compound represented by formula M1, formula M2, or formula M3 below.

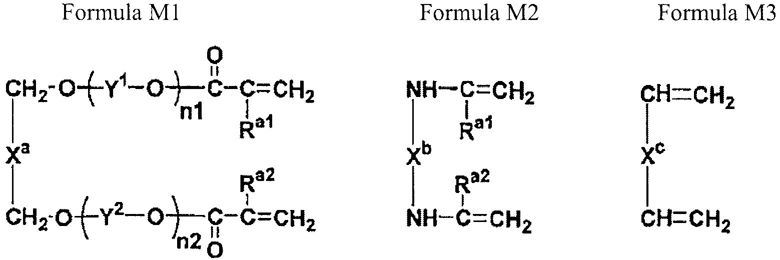

In formula M1 to formula M3, R^{a1} and R^{a2} each independently represent a hydrogen atom or a methyl group, Y¹ and Y² each independently represent an alkylene group, n1 and n2 each independently represent 0 or a number of 1 or more, and X^{a}, X^{b}, and X^{c} each independently represent a divalent linking group.

R^{a1} and R^{a2} preferably represent a hydrogen atom.

The alkylene group represented by Y¹ and Y² is preferably a linear or branched alkylene group having 2 to 4 carbon atoms and more preferably an ethylene group or a propylene group.

When n1 represents 2 or more, a plurality of Y¹ in a plurality of repeating units -Y¹-O-may be the same or different. Similarly, when n2 represents 2 or more, a plurality of Y² in a plurality of repeating units -Y²-O- may be the same or different.

X^{a} represents a divalent linking group such as an alkylene group, an alkylene group with an oxygen atom, or a phenylene group. X^{a} preferably represents an alkylene group or an alkylene group with an oxygen atom. The alkylene group with an oxygen atom is a linking group such as -alkylene-O-alkylene-, -alkylene-O-, or -O-alkylene-.

The divalent linking group represented by X^{a} may have a substituent. Preferred examples of the substituent include -OH, -OC(=O)C(R^{a3})=CH₂, -(O-Y³)ₙ₃-OH, and -(O-Y³)ₙ₃-O-C(=O)C(R^{a3})=CH₂. Herein, R^{a3} has the same meaning as R^{a1}, Y³ has the same meaning as Y¹, and n3 has the same meaning as n1. In each case, preferred examples thereof are also the same.

X^{a} more preferably represents an alkylene group, an alkylene group with an oxygen atom, or a group represented by any one of formula L1 to formula L6 below.

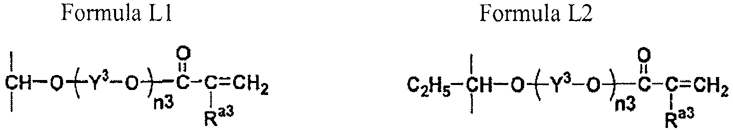

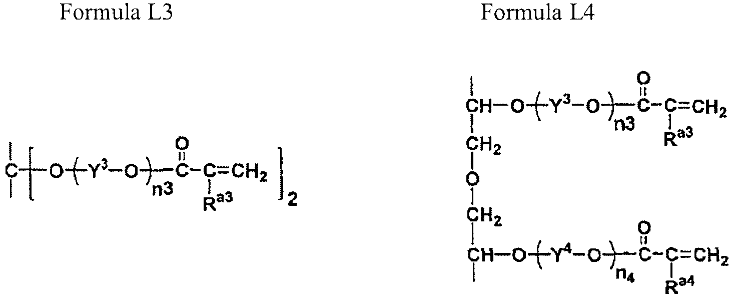

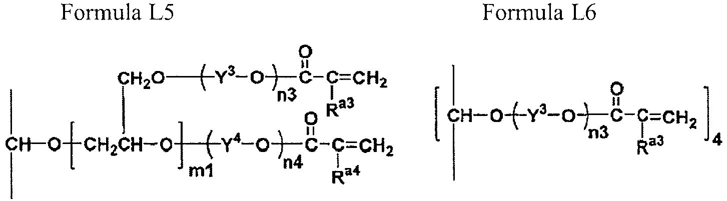

In formula L1 to formula L6, R^{a3} has the same meaning as R^{a1}, Y³ and Y⁴ have the same meaning as Y¹, n3 and n4 have the same meaning as nl, and m1 represents a number of 1 or more.

The divalent linking group represented by X^{b} is, for example, an alkylene group, an alkylene group with an oxygen atom or -N(Rx)-, or a phenylene group and is preferably an alkylene group or an alkylene group with an oxygen atom or -N(Rx)-. Herein, Rx represents a hydrogen atom or an alkyl group.

The number of carbon atoms at each alkylene moiety in the alkylene group or the alkylene group with an oxygen atom is preferably 2 to 10, more preferably 2 to 6, further preferably 2 or 3 (i.e., an ethylene group or a propylene group), and particularly preferably 2 (i.e., an ethylene group).

The divalent linking group represented by X^{c} is preferably, for example, an alkylene group, an alkylene group with an oxygen atom, or an arylene group and more preferably an alkylene group or a phenylene group. The divalent linking group may have a substituent. Examples of the substituent include a hydroxy group, a halogen atom, an alkyl group, an alkoxy group, an acyloxy group, and an acylamino group.

Herein, the alkylene group may sandwich a divalent group so as to have a structure such as -CH₂-O-Ar-O-CH₂-, -CH₂-O-Ar-Z-Ar-O-CH₂-, or -CH₂-O-C(=O)-Ar-C(=O)-O-CH₂-. Ar represents an arylene group and Z represents an alkylene group (e.g., a methylene group, a 2,2-propanediyl group, or a 2,2-butanediyl group), -O-, or -S-.

A group obtained by replacing each hydroxy group of polyhydric alcohol with -OCH2-is preferred. In this case, the compound is an allyl ether of polyhydric alcohol.

Specifically, the compound represented by formula M1 is, for example, a compound obtained by (meth)acryloylating all hydroxy groups of a polyhydric alcohol below.

Examples of the polyhydric alcohol include ethylene glycol, propylene glycol, glycerol, trimethylolpropane, pentaerythritol, dipentaerythritol, diethylene glycol, dipropylene glycol, polyethylene glycol, polypropylene glycol, diglycerol, polyglycerol, sorbitol, polyoxyethylene glycerol, polyoxypropylene glyceryl ether, polyoxyethylene polyoxypropylene glyceryl ether, polyoxyethylene polyoxypropylene trimethylolpropane, polyoxypropylene diglyceryl ether, polyoxyethylene polyoxypropylene pentaerythritol ether, polyoxyethylene dipentaerythritol ether, and polyoxypropylene sorbitol.

The polyhydric alcohol serving as a raw material for synthesis is commercially available. The polyhydric alcohol is available from, for example, Tokyo Chemical Industry Co., Ltd., SAKAMOTO YAKUHIN KOGYO Co., Ltd, and NOF Corporation. In particular, the polyhydric alcohol is preferably Unigly G-2, Uniox G-1200, Uniol SGP-65, Uniol TG-700, Uniol TG-1000, Uniol TG-3000, Uniol TG-4000R, Unilube 50TG-32, Unilube 43TT-2500, Unilube 10TT-4500, Unilube DGP-700, Unilube DGP-700F, Unilube DGP-950, Unilube 5TP-300KB, Uniol HS-1600D, or Uniol HS-2000D (trade name) manufactured by NOF CORPORATION.

Furthermore, by acylating such a polyhydric alcohol using an acylating agent such as (meth)acrylic acid chloride, the compound represented by formula M1 can be easily obtained.

Examples of the compound represented by formula M2 include polyfunctional (meth)acrylamides such as methylenebis(meth)acrylamide, ethylenebis(meth)acrylamide, propylenebis(meth)acrylamide, 1,2-bis(meth)acrylamidopropane, 1,2-bis(meth)acrylamide-2-methylpropane, 2,3-dimethyl-2,3-bis(meth)acrylamidobutane, 2,2-dimethyl-1,3-bis(meth)acrylamidopropane, 3,3'-bis(meth)acrylamide-N-methyldipropylamine, 3,3'-bis(meth)acrylamidodipropylamine, 1,3-bis(meth)acrylamidopentane, tris[3-(meth)acrylamidopropyl]amine, 2-methyl-1,3-bis(meth)acrylamidopropane, diethylene glycol bis(3-(meth)acrylamidopropyl) ether, tris(2-(meth)acrylamidoethyl)amine, tri(meth)acrylamidated products of diethylenetriamine, and tetra(meth)acrylamidated products of triethylenetetramine.

Examples of the compound represented by formula M3 include polyfunctional aliphatic vinyl monomers such as divinylalkylene glycols (e.g., divinylethylene glycol) and diallyloxyalkanes and polyfunctional aromatic vinyl monomers such as divinylbenzene, diallyl phthalate, and diallylbenzene phosphonate.

The polymerizable compound preferably includes a compound represented by formula M4 below.

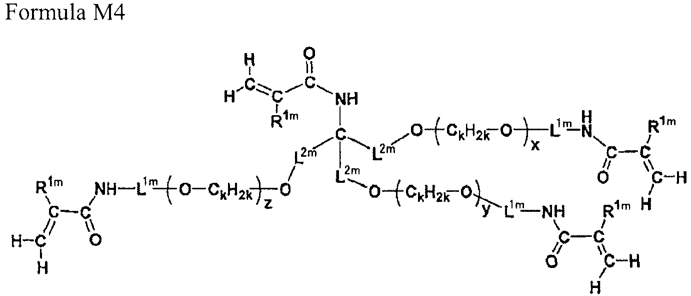

In formula M4, R^{1m} each independently represent a hydrogen atom or a methyl group, L^{1m} each independently represent a linear or branched alkylene group having 2 to 4 carbon atoms, where an oxygen atom and a nitrogen atom bond to both terminals of L^{1m} without bonding to the same carbon atom of L^{1m}, L^{2m} represents a divalent linking group, k each independently represent 2 or 3, x, y, and z each independently represent an integer of 0 to 6, and x + y + z satisfies 0 to 18.

In formula M4, the number of carbon atoms of the alkylene group represented by L^{1m} is preferably 3 or 4 and more preferably 3. In particular, L^{1m} preferably represents a linear alkylene group having 3 carbon atoms. The alkylene group represented by L^{1m} may further have a substituent such as an aryl group or an alkoxy group.

The divalent linking group represented by L^{2m} in formula M4 is, for example, an alkylene group, an arylene group, a divalent heterocyclic group, or a combination thereof and is preferably an alkylene group. When the divalent linking group includes an alkylene group, the alkylene group may further include at least one group selected from the group consisting of -O-, -S-, and -N(Ra)-. Herein, Ra represents a hydrogen atom or an alkyl group having 1 to 4 carbon atoms.

The phrase "alkylene group includes -O-" refers to, for example, a structure in which alkylene groups are linked through an oxygen atom like -alkylene-O-alkylene-.

Specific examples of the alkylene group including -O- include -C₂H₄-O-C₂H₄- and - C₃H₆-O-C₃H₆-.

When L^{2m} includes an alkylene group, examples of the alkylene group include a methylene group, an ethylene group, a propylene group, a butylene group, a pentylene group, a hexylene group, a heptylene group, an octylene group, and a nonylene group.

The number of carbon atoms of the alkylene group is preferably 1 to 6, more preferably 1 to 3, and particularly preferably 1.

The alkylene group may further have a substituent. Examples of the substituent include aryl groups (preferably an aryl group having 6 to 14 carbon atoms and more preferably an aryl group having 6 to 10 carbon atoms) and alkoxy groups (preferably an alkoxy group having 1 to 6 carbon atoms and more preferably an alkoxy group having 1 to 3 carbon atoms).

When L^{2m} includes an arylene group, examples of the arylene group include a phenylene group and a naphthylene group.

The number of carbon atoms of the arylene group is preferably 6 to 14, more preferably 6 to 10, and particularly preferably 6.

The arylene group may further have a substituent. Examples of the substituent include alkyl groups (preferably an alkyl group having 1 to 6 carbon atoms and more preferably an alkyl group having 1 to 3 carbon atoms) and alkoxy groups (preferably an alkoxy group having 1 to 6 carbon atoms and more preferably an alkoxy group having 1 to 3 carbon atoms).

When L^{2m} includes a divalent heterocyclic group, the heterocycle is preferably a five-membered or six-membered ring or may undergo annulation. The heterocycle may be an aromatic heterocycle or a non-aromatic heterocycle.

The heterocycle of the divalent heterocyclic group is, for example, a heterocycle selected from the group consisting of pyridine, pyrazine, pyrimidine, pyridazine, triazine, quinoline, isoquinoline, quinazoline, cinnoline, phthalazine, quinoxaline, pyrrole, indole, furan, benzofuran, thiophene, benzothiophene, pyrazole, imidazole, benzimidazole, triazole, oxazole, benzoxazole, thiazole, benzothiazole, isothiazole, benzisothiazole, thiadiazole, isoxazole, benzisoxazole, pyrrolidine, piperidine, piperazine, imidazolidine, and thiazoline. The heterocycle is preferably an aromatic heterocycle and more preferably a heterocycle selected from the group consisting of pyridine, pyrazine, pyrimidine, pyridazine, triazine, pyrazole, imidazole, benzimidazole, triazole, thiazole, benzothiazole, isothiazole, benzisothiazole, and thiadiazole.

The positions of two bonding arms of the heterocycle in the divalent heterocyclic group are not particularly limited. For example, in the case of pyridine, substitution can be performed at a 2-position, a 3-position, or a 4-position and the two bonding arms may be located at any positions.

The heterocycle of the divalent heterocyclic group may further have a substituent. Examples of the substituent include alkyl groups (preferably an alkyl group having 1 to 6 carbon atoms and more preferably an alkyl group having 1 to 3 carbon atoms), aryl groups (preferably an aryl group having 6 to 14 carbon atoms and more preferably an aryl group having 6 to 10 carbon atoms), and alkoxy groups (preferably an alkoxy group having 1 to 6 carbon atoms and more preferably an alkoxy group 1 to 3 carbon atoms).

In formula M4, CₖH₂ₖ may have a linear structure or a branched structure.

In formula M4, x, y, and z preferably each independently represent an integer of 0 to 5 and more preferably an integer of 0 to 3. Furthermore, x + y + z preferably satisfies 0 to 15 and more preferably satisfies 0 to 9.

The compound represented by formula M4 is preferably at least one compound selected from the group consisting of polymerizable compounds 1 to 12 below.

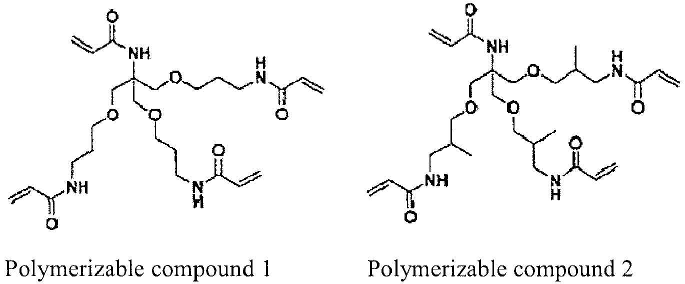

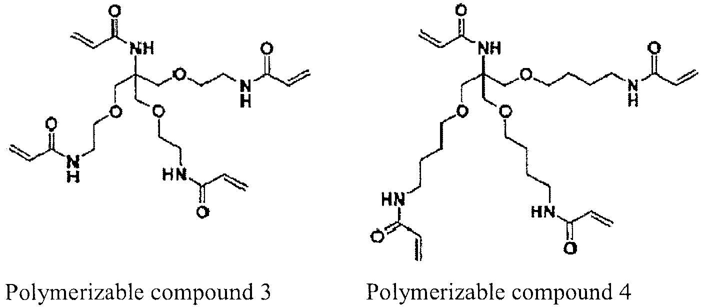

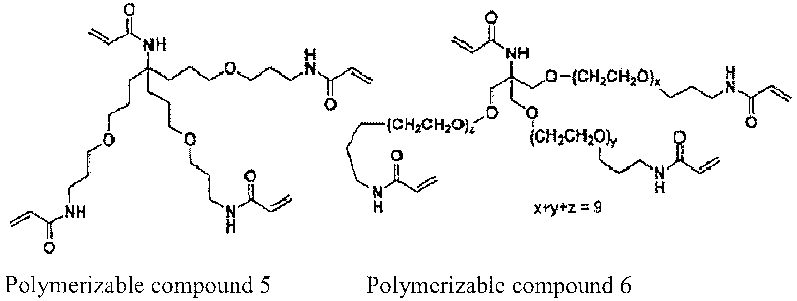

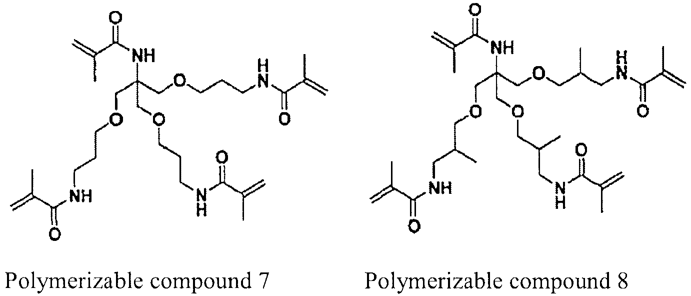

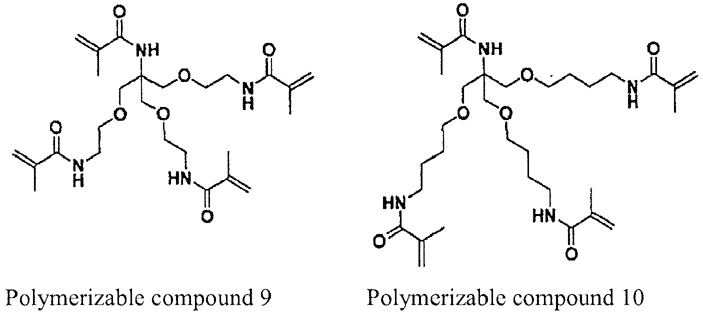

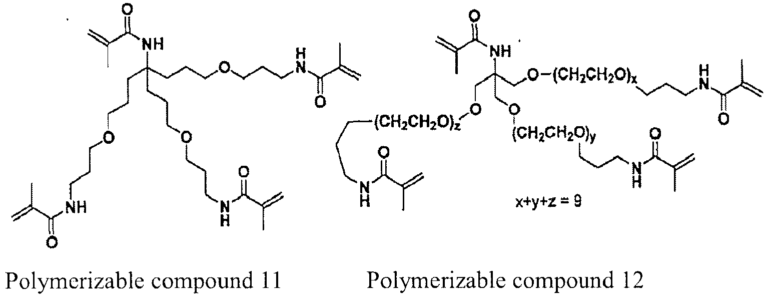

These polymerizable compounds may be used alone or in combination of two or more.

The content of the polymerizable compound in the aqueous curable composition according to the present disclosure is preferably 10 to 80 mass%, more preferably 15 to 70 mass%, and particularly preferably 20 to 60 mass% relative to the total mass of the aqueous curable composition from the viewpoint of curing properties, though depending on the applications.

### Solvent

The aqueous curable composition according to the present disclosure may further include a solvent other than water.

An example of the solvent other than water is an organic solvent.

When the aqueous curable composition according to the present disclosure is used as an ink composition, an organic solvent and water are also preferably used in combination from the viewpoint of preventing drying or facilitating infiltration of an ink into paper. In consideration of the combined use of an organic solvent and water, the organic solvent is preferably a water-soluble organic solvent. Furthermore, an organic solvent having a vapor pressure lower than that of water is preferably used in order to prevent an ink ejection port of a spray nozzle from being clogged through drying and solidifying of a curable composition that adheres to a portion near the ink ejection port.

Examples of the organic solvent that can be used in the present disclosure, in particular, the water-soluble organic solvent include glycerol, 1,2,6-hexanetriol, trimethylolpropane, alkanediols such as ethylene glycol and propylene glycol (polyhydric alcohols); sugar alcohols; alkyl alcohols having 1 to 4 carbon atoms, such as ethanol, methanol, butanol, propanol, and isopropanol; and glycol ethers such as ethylene glycol monomethyl ether, ethylene glycol monoethyl ether, ethylene glycol monobutyl ether, ethylene glycol monomethyl ether acetate, diethylene glycol monomethyl ether, diethylene glycol monoethyl ether, diethylene glycol mono-n-propyl ether, ethylene glycol monoisopropyl ether, diethylene glycol monoisopropyl ether, ethylene glycol mono-n-butyl ether, ethylene glycol mono-t-butyl ether, diethylene glycol mono-t-butyl ether, triethylene glycol monoethyl ether, 1-methyl-1-methoxybutanol, propylene glycol monomethyl ether, propylene glycol monoethyl ether, propylene glycol mono-t-butyl ether, propylene glycol mono-n-propyl ether, propylene glycol monoisopropyl ether, dipropylene glycol, dipropylene glycol monomethyl ether, dipropylene glycol monoethyl ether, dipropylene glycol mono-n-propyl ether, dipropylene glycol monoisopropyl ether, and tripropylene glycol monomethyl ether.

For the purpose of preventing drying, polyhydric alcohols are useful. Examples of the polyhydric alcohols include glycerol, ethylene glycol, diethylene glycol, triethylene glycol, propylene glycol, dipropylene glycol, tripropylene glycol, 1,3-butanediol, and 2,3-butanediol.

For the purpose of facilitating infiltration, aliphatic diols are suitable. Examples of the aliphatic diols include 2-ethyl-2-methyl-1,3-propanediol, 3,3-dimethyl-1,2-butanediol, 2,2-diethyl-1,3-propanediol, 2-ethyl-1,3-hexanediol, and 2,2,4-trimethyl-1,3-pentanediol. In particular, 2-ethyl-1,3-hexanediol and 2,2,4-trimethyl-1,3-pentanediol are preferred.

When the aqueous curable composition according to the present disclosure is used as an ink composition, at least one of compounds represented by formula S is preferably included as an organic solvent from the viewpoint of suppressing generation of curling of recording media.

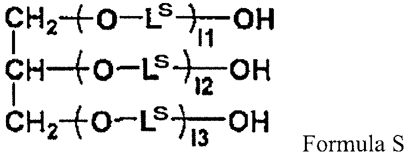

In formula S, L^{s} represents an alkylene group, 11, 12, and 13 each independently represent an integer of 1 or more, and 11 + 12 + 13 satisfies 3 to 15.

L^{s} preferably represents an ethylene group or a propylene group and more preferably represents a propylene group. When 11, 12, or 13 is 2 or more, a plurality of -O-L^{s}-may be the same or different.

The value of 11 + 12 + 13 is preferably in the range of 3 to 12 and more preferably in the range of 3 to 10. When the value of 11 + 12 + 13 is 3 or more, curling is sufficiently suppressed. When the value of 11 + 12 + 13 is 15 or less, high discharge performance is achieved.

Specific examples of the compounds represented by formula S are shown below. In the following compounds, the term "POP(3) glyceryl ether" refers to a glyceryl ether in which three propyleneoxy groups in total bond to glycerol. The same applies to the others.

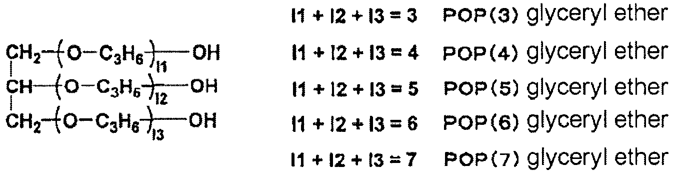

Furthermore, a compound a to a compound g are also preferably included as organic solvents from the viewpoint of suppressing generation of curing of recording media. AO represents at least one of ethyleneoxy (EO) [-CH₂CH₂O-] or propyleneoxy (PO) [-C₃H₆O-].

Compound a: n-C₄H₉O(AO)₄-H (AO = EO or PO, EO:PO = 1:1) (manufactured by NOF Corporation)
Compound b: n-C₄H₉O(AO)₁₀-H (AO = EO or PO, EO:PO = 1:1) (manufactured by NOF Corporation)
Compound c: HO(AO)₄₀-H (AO = EO or PO, EO:PO = 1:3) (manufactured by NOF Corporation)
Compound d: HO(AO)₅₅-H (AO = EO or PO, EO:PO = 5:6) (manufactured by NOF Corporation)
Compound e: HO(PO)₃-H (PP-200, manufactured by Sanyo Chemical Industries, Ltd.)
Compound f: HO(PO)₇-H (PP-400, manufactured by Sanyo Chemical Industries, Ltd.)
Compound g: 1,2-hexanediol (Ube Industries, Ltd.)

In the present disclosure, such solvents other than water may be used alone or in combination of two or more.

The content of the solvent other than water is preferably 0 to 40 mass%, more preferably 0 to 20 mass%, and particularly preferably 0 to 10 mass% relative to the total mass of the aqueous curable composition. In the above range, when the aqueous curable composition is used as an ink composition, generation of curling can be suppressed without deteriorating the stability of the ink composition and the discharge performance.

### Surfactant

The aqueous curable composition according to the present disclosure may optionally include a surfactant.

The surfactant may be any of anionic surfactants, cationic surfactants, amphoteric surfactants, nonionic surfactants, and betaine surfactants. A dispersant (polymer dispersant) described later may also be used as a surfactant. Among them, the surfactant is preferably a nonionic surfactant and particularly preferably a nonionic surfactant having an acetylene glycol structure.

In the present disclosure, the surfactants may be used alone or in combination of two or more.

The content of the surfactant is not particularly limited, but is preferably 0.01 to 10 mass%, more preferably 0.05 to 5 mass%, and particularly preferably 0.1 to 2 mass% relative to the total mass of the aqueous curable composition. In the above range, good adhesiveness to a substrate is achieved without deteriorating the curing properties.

### Colorant

The aqueous curable composition according to the present disclosure may include a colorant. The aqueous curable composition including a colorant can be suitably used as an ink composition.

In this specification, the "ink composition" includes a clear ink (colorless ink) composition not including a colorant. In this specification, the "ink composition" and the "composition for inks" have the same meaning.

Any publicly known dye or pigment can be used as the colorant. In particular, a colorant that is substantially insoluble in water or a colorant that is very slightly soluble in water is preferably used from the viewpoint of colorability. Specific examples of the colorant include pigments, disperse dyes, oil-soluble dyes, and dyes that form J-aggregates. In particular, a pigment is preferably used from the viewpoint of light resistance.

The pigment may be any of an organic pigment and an inorganic pigment.

Examples of the organic pigment include azo pigments, polycyclic pigments, dye chelates, nitro pigments, nitroso pigments, and aniline black. In particular, for example, azo pigments and polycyclic pigments are preferred. Examples of the azo pigments include azo lakes, insoluble azo pigments, condensed azo pigments, and chelate azo pigments. Examples of the polycyclic pigments include phthalocyanine pigments, perylene pigments, perinone pigments, anthraquinone pigments, quinacridone pigments, diketopyrrolopyrrole pigments, dioxazine pigments, indigo pigments, thioindigo pigments, isoindolinone pigments, and quinophthalone pigments. Examples of the dye chelates include basic dye chelates and acidic dye chelates.

Examples of the inorganic pigment include titanium oxide, iron oxide, calcium carbonate, barium sulfate, aluminum hydroxide, barium yellow, cadmium red, chrome yellow, and carbon black. In particular, carbon black is preferred that is produced by a publicly known process such as a contact process, a furnace process, or a thermal process.

More specifically, for example, pigments described in paragraphs 0142 to 0145 of JP2007-100071A are preferably used for the aqueous curable composition according to the present disclosure.

In the aqueous curable composition according to the present disclosure, these colorants may be used alone or in combination of two or more.

When the aqueous curable composition according to the present disclosure is used as an ink composition, the content of the colorant in the ink composition is preferably 0.5 to 20 mass%, more preferably 1 to 15 mass%, and particularly preferably 2 to 10 mass% relative to the total amount of the ink composition from the viewpoint of color density, granularity, and discharge reliability.

### Dispersant

When the aqueous curable composition according to the present disclosure includes a pigment, the aqueous curable composition according to the present disclosure preferably includes a dispersant.

Furthermore, when the aqueous curable composition according to the present disclosure is prepared, a dispersion (hereafter also referred to as a coloring particle dispersion) in which a pigment is dispersed in an aqueous medium such as water or an alcohol with a dispersant is preferably used.

The dispersant may be, for example, a polymer dispersant or a low-molecular-weight-surfactant dispersant and is preferably a polymer dispersant.

When the coloring particle dispersion is used for an ink composition, from the viewpoint of the dispersion stability of pigment particles and the discharge performance in an ink jet method, the coloring particle dispersion is preferably obtained by dispersing a pigment in water with a polymer dispersant and then crosslinking the polymer dispersant particles by adding a crosslinking agent to cover at least a part of the surface of the pigment with the crosslinked polymer.

The polymer dispersant may be a water-soluble polymer dispersant or a water-insoluble polymer dispersant. The polymer dispersant is preferably a water-insoluble polymer dispersant from the viewpoint of the dispersion stability of pigment particles and the discharge performance in an ink jet method.

Any publicly known water-insoluble polymer dispersant can be used in the present disclosure as long as the water-insoluble polymer dispersant is capable of dispersing a pigment. For example, a polymer including a hydrophobic structural unit and a hydrophilic structural unit can be suitably used as the water-insoluble polymer dispersant.

Examples of a monomer constituting the hydrophobic structural unit include styrene monomers, alkyl (meth)acrylates, and aromatic group-containing (meth)acrylates.

Any monomer including a hydrophilic group can be used as a monomer constituting the hydrophilic structural unit. Examples of the hydrophilic group include a nonionic group, a carboxy group, a sulfonic acid group, and a phosphoric acid group. Examples of the nonionic group include a hydroxy group, an amide group (having an unsubstituted nitrogen atom), a group derived from an alkylene oxide polymer (e.g., poly(ethylene oxide) and poly(propylene oxide)), and a group derived from a sugar alcohol. From the viewpoint of dispersion stability, the hydrophilic structural unit preferably has at least a carboxy group or preferably has a nonionic group and a carboxy group.

The water-insoluble polymer dispersant is specifically, for example, a styrene-(meth)acrylic acid copolymer, a styrene-(meth)acrylic acid-(meth)acrylate copolymer, a (meth)acrylate-(meth)acrylic acid copolymer, a polyethylene glycol (meth)acrylate-(meth)acrylic acid copolymer, or a styrene-maleic acid copolymer.

From the viewpoint of the dispersion stability of a pigment, the water-insoluble polymer dispersant is preferably a vinyl polymer including a carboxy group and more preferably a vinyl polymer that has at least a structural unit derived from an aromatic group-containing monomer as a hydrophobic structural unit and a structural unit having a carboxy group as a hydrophilic structural unit.

The weight-average molecular weight of the water-insoluble polymer dispersant is preferably 3,000 to 200,000, more preferably 5,000 to 100,000, further preferably 5,000 to 80,000, and particularly preferably 10,000 to 60,000 from the viewpoint of the dispersion stability of a pigment.

The colorant included in the aqueous curable composition according to the present disclosure preferably includes the above-described pigment and the above-described water-insoluble polymer dispersant. Coloring particles preferably have a structure in which at least a part of the surface of the pigment is covered with a water-insoluble polymer dispersant.

Such coloring particles can be obtained as a coloring particle dispersion by, for example, dispersing a mixture including a pigment, a dispersant, and optionally water or a solvent using a dispersing machine. Specifically, for example, the coloring particle dispersion can be produced by performing a step (mixing and hydrating step) of adding an aqueous solution including a basic substance to a mixture in which the pigment, the water-insoluble polymer dispersant, and the dispersant are dissolved or dispersed in an organic solvent and then performing a step (solvent-removing step) of removing the organic solvent. By this method, the pigment is finely dispersed and thus a coloring particle dispersion having high storage stability can be produced.

The volume-average particle size of the coloring particle dispersion is preferably 10 to 200 nm, more preferably 10 to 150 nm, and particularly preferably 10 to 100 nm. In the case where the coloring particle dispersion is used in an ink composition, when the volume-average particle size is 200 nm or less, good color reproducibility is achieved and also good droplet ejection characteristics are achieved in an ink jet method. When the volume-average particle size is 10 nm or more, good light resistance is achieved.

The particle-size distribution of the coloring particles (colorant) is not particularly limited and may be a wide particle-size distribution or a monodisperse particle-size distribution. Two or more colorants having a monodisperse particle-size distribution may be used as a mixture. The volume-average particle size and the particle-size distribution can be measured by, for example, a light scattering method.

In the aqueous curable composition according to the present disclosure, such coloring particle dispersions may be used alone or in combination of two or more.

The content of the dispersant is preferably 10 to 100 mass%, more preferably 20 to 70 mass%, and particularly preferably 30 to 50 mass% relative to the pigment. When the content of the dispersant relative to the pigment is within the above range, pigment particles are covered with an appropriate amount of dispersant. Thus, coloring particles having good dispersibility, dispersion stability, and colorability can be obtained.

The coloring particle dispersion may include other dispersants in addition to the water-insoluble polymer dispersant. For example, a typically used water-soluble low molecular weight dispersant or a water-soluble polymer can be used. The dispersant other than the water-insoluble polymer dispersant can be used within the above-described range of the content of the dispersant.

### Sensitizer

The aqueous curable composition according to the present disclosure may include a sensitizer such as a sensitizing dye in addition to the above-described components. The sensitizing dye may be any publicly known sensitizing dye. In consideration of the characteristics of the aqueous curable composition according to the present disclosure, a sensitizing dye having high solubility in water is preferred. Specifically, the sensitizing dye is preferably a sensitizing dye that is soluble in water at 25°C in an amount of 0.5 mass% or more, more preferably a sensitizing dye that is soluble in water in an amount of 1 mass% or more, and particularly preferably a sensitizing dye that is soluble in water in an amount of 3 mass% or more. The sensitizing dye may also be a polymerization initiator obtained by dispersing a water-insoluble polymerization initiator in a water-soluble medium.

Examples of the sensitizer that can be used in a combined manner in the aqueous curable composition according to the present disclosure include N-[2-hydroxy-3-(3,4-dimethyl-9-oxo-9H-thioxanthen-2-yloxy)propyl]-N,N,N-trimethylaminium chloride, benzophenone, thioxanthone, anthraquinone derivatives and 3-acylcoumarin derivatives, terphenyl, styryl ketone and 3-(aroylmethylene)thiazoline, camphorquinone, eosin, rhodamine and erythrosine, and water-insoluble modified products or dispersed products thereof. Furthermore, a sensitizing dye disclosed in JP2010-24276A and a sensitizing dye disclosed in JP1994-107718A (JP-H06-107718A) can also be suitably used in the present disclosure.

### Resin particles

The aqueous curable composition according to the present disclosure may optionally include resin particles.

Examples of the resin particles include particles and latices of acrylic resin, vinyl acetate resin, styrene-butadiene resin, vinyl chloride resin, acrylic-styrene resin, butadiene resin, styrene resin, crosslinked acrylic resin, crosslinked styrene resin, benzoguanamine resin, phenolic resin, silicone resin, epoxy resin, urethane resin, paraffin resin, and fluorocarbon resin. In particular, acrylic resin, acrylic-styrene resin, styrene resin, crosslinked acrylic resin, or crosslinked styrene resin is preferred.

The weight-average molecular weight of the resin particles is preferably 10,000 to 200,000 and more preferably 100,000 to 200,000.

The volume-average particle size of the resin particles is preferably 10 nm to 1 µm, more preferably 15 to 200 nm, and particularly preferably 20 to 50 nm.

The particle-size distribution of the resin particles is not particularly limited and may be a wide particle-size distribution or a monodisperse particle-size distribution. Two or more types of resin particles having a monodisperse particle-size distribution may be used as a mixture. The volume-average particle size and the particle-size distribution can be measured in the same manner as in the case of the coloring particle dispersion.

The glass transition temperature (Tg) of the resin particles is preferably 30°C or higher, more preferably 40°C or higher, and particularly preferably 50°C or higher. In the present disclosure, an actually measured glass transition temperature Tg is used. Specifically, the glass transition temperature Tg is measured using a differential scanning calorimeter (DSC) EXSTAR6220 manufactured by SII NanoTechnology Inc. under typical measurement conditions.

The content of the resin particles is preferably 0 to 20 mass%, more preferably 0 to 10 mass%, and particularly preferably 0 to 5 mass% relative to the total mass of the aqueous curable composition.

### Other components

In addition to the above components, the aqueous curable composition according to the present disclosure may include other components.

Examples of the other components include publicly known additives such as an ultraviolet absorber, an anti-fading agent, a fungicide, a pH adjuster, an anticorrosive, an antioxidant, an emulsification stabilizer, a preservative, an anti-foaming agent, a viscosity modifier, a dispersion stabilizer, a chelating agent, and a solid humectant.

Examples of the ultraviolet absorber include a benzophenone-based ultraviolet absorber, a benzotriazole-based ultraviolet absorber, a salicylate-based ultraviolet absorber, a cyanoacrylate-based ultraviolet absorber, and a nickel complex-based ultraviolet absorber.

The anti-fading agent may be an organic anti-fading agent or a metal complex anti-fading agent. Examples of the organic anti-fading agent include hydroquinones, alkoxyphenols, dialkoxyphenols, phenols, anilines, amines, indans, chromans, alkoxyanilines, and heterocycles. Examples of the metal complex anti-fading agent include nickel complexes and zinc complexes.

Examples of the fungicide include sodium dehydroacetate, sodium benzoate, sodium pyridinethione-1-oxide, ethyl p-hydroxybenzoate, 1,2-benzisothiazolin-3-one, sodium sorbate, and sodium pentachlorophenate.

The content of the fungicide in the aqueous curable composition is preferably in the range of 0.02 to 1.00 mass%.

The pH adjuster may be any compound capable of adjusting the pH to a desired value without adversely affecting the curable composition to be prepared. Examples of the pH adjuster include alcohol amines (e.g., diethanolamine, triethanolamine, and 2-amino-2-ethyl-1,3-propanediol), alkali metal hydroxides (e.g., lithium hydroxide, sodium hydroxide, and potassium hydroxide), ammonium hydroxides (e.g., ammonium hydroxide and quaternary ammonium hydroxide), phosphonium hydroxide, and alkali metal carbonates.

Examples of the anticorrosive include acid sulfites, sodium thiosulfate, ammonium thiodiglycolate, diisopropylammonium nitrite, pentaerythritol tetranitrate, and dicyclohexylammonium nitrite.

Examples of the antioxidant include a phenol-based antioxidant (including a hindered phenol-based antioxidant), an amine-based antioxidant, a sulfur-based antioxidant, and a phosphorus-based antioxidant.

Examples of the chelating agent include sodium ethylenediaminetetraacetate, sodium nitrilotriacetate, sodium hydroxyethylethylenediaminetriacetate, sodium diethylenetriaminepentaacetate, and sodium uramildiacetate.

Next, the case where the aqueous curable composition according to the present disclosure is used as an ink composition will be specifically described below.

### Ink composition

When the aqueous curable composition according to the present disclosure is used as an ink composition, the aqueous curable composition according to the present disclosure preferably includes a colorant and more preferably includes a colorant and a dispersant.

The aqueous curable composition according to the present disclosure can be suitably used as an ink jet ink composition.

The viscosity and surface tension in the case where the aqueous curable composition according to the present disclosure is used as an ink composition can be appropriately selected and adjusted in accordance with the applications of the ink composition and the image-forming method.

For example, when the aqueous curable composition according to the present disclosure is used as an ink jet ink composition, the viscosity of the ink composition at a temperature at which the ink composition is ejected is preferably 1.2 mPa·s or more and 15.0 mPa·s or less, more preferably 2 mPa·s or more and less than 13 mPa·s, and particularly preferably 2.5 mPa·s or more and less than 10 mPa·s.

### Image-forming method

An image-forming method according to the present disclosure includes an ink applying step of applying the aqueous curable composition (hereafter, the aqueous curable composition according to the present disclosure used in the image-forming method according to the present disclosure is also referred to as an "ink composition" or simply an "ink") according to the present disclosure onto a recording medium and an irradiation step of irradiating the applied ink composition with active energy rays. The image-forming method according to the present disclosure may further include a treatment liquid applying step of applying, onto the recording medium, a treatment liquid including an aggregating agent capable of forming an aggregate through contact with components of the ink composition.

### Recording medium

The recording medium used in the image-forming method according to the present disclosure is not particularly limited, and may be a typical printing paper mainly made of cellulose and used for typical offset printing, an ink jet paper, a photo paper, an electrophotographic paper, a film (e.g., resin film), a textile, glass, metal, or ceramic.

In particular, the recording medium is preferably a so-called coated paper, which is used for typical offset printing. The coated paper is a recording medium obtained by applying a coating material onto the surface of, for example, wood-free paper or acid-free paper, which is mainly made of cellulose and is not subjected to surface treatment, to form a coating layer. In the ink jet recording that uses a typical aqueous ink, the ink is relatively slowly absorbed and dried on the coated paper, which easily poses quality problems in terms of color density, glossiness of an image, rubfastness, and the like. In the image-forming method according to the present disclosure, however, an image having high color density, high glossiness, and good rubfastness can be formed. In particular, a coated paper having base paper and a coating layer including an inorganic pigment is preferably used. A coated paper having base paper and a coating layer including kaolin and/or calcium bicarbonate is more preferably used. Specifically, art paper, coated paper, light weight coated paper, or ultra-light weight coated paper is more preferably used.

A commercially available coated paper can be used. Examples of the coated paper include art papers (Al) such as "OK Kinfuji Plus" manufactured by Oji Paper Co., Ltd. and "Tokubishi Art" manufactured by Mitsubishi Paper Mills Limited, coated papers (A2, B2) such as "OK Top Coat Plus" manufactured by Oji Paper Co., Ltd. and "Aurora Coat" manufactured by Nippon Paper Industries Co., Ltd., matte coated papers such as "U-Light" manufactured by Nippon Paper Industries Co., Ltd., light weight coated papers (A3) such as "OK Coat L" manufactured by Oji Paper Co., Ltd. and "Aurora L" manufactured by Nippon Paper Industries Co., Ltd., and ultra-light weight coated papers such as "OK Ever Light Coat" manufactured by Oji Paper Co., Ltd. and "Aurora S" manufactured by Nippon Paper Industries Co., Ltd.

### Ink applying step

The method for applying an ink composition onto a recording medium is not particularly limited as long as the ink composition can be applied so that a desired image is formed. Various publicly known ink applying methods can be employed. Examples of the ink applying method include letterpress printing, planographic printing, intaglio printing, mimeographic printing, and an ink jet method. In particular, the ink applying step is preferably performed by applying an ink composition onto a recording medium through an ink jet method because the aqueous curable composition according to the present disclosure is particularly suitable as an ink jet ink composition and downsizing of recording apparatuses and high-speed recording are achieved.

### Ink jet method

In an ink jet method, an ink composition is ejected from an ink ejection head by applying energy to the ink composition and a colored image is formed on a recording medium.

The ink jet method used in the image-forming method according to the present disclosure is not particularly limited and a publicly known ink jet method can be employed. Examples of the ink jet method include a thermal ink jet (Bubble Jet (registered trademark)) method of heating ink to form bubbles and using the generated pressure, a charge control method of using an electrostatic attraction force to eject ink, a drop-on-demand method (pressure pulse method) of using vibration pressure of a piezoelectric element, and an acoustic method of ejecting ink using acoustic beams (radiation pressure) obtained through conversion from electric signals.

The ink jet method may be any of an on-demand method and a continuous method. Furthermore, for example, an ink nozzle used is not particularly limited and can be appropriately selected in accordance with the purpose.

The ink jet method includes a method in which many low-density ink (photo ink) droplets are ejected with a small volume, a method in which the image quality is improved by using a plurality of inks having substantially the same hue but different densities, and a method of using a colorless, transparent ink.

The ink jet method includes a shuttle system in which a short serial head is used and recording is performed while a recording medium is scanned with the serial head in its width direction and a line system of using a line head in which recording elements are arranged so as to cover the entirety of one side of the recording medium. In the line system, image recording can be performed on the entire recording medium by scanning the recording medium in a direction orthogonal to the direction in which the recording elements are arranged, which does not require a conveyance system such as a carriage used for scanning with a short head. Furthermore, complicated scanning control between movement of a carriage and a recording medium is not required and only the recording medium moves. Therefore, the recording speed is higher in the line system than in the shuttle system.

More specifically, in the image-forming method according to the present disclosure, an ink jet method disclosed in paragraphs 0093 to 0105 in JP2003-306623A can be preferably used.

### Treatment liquid applying step

The image-forming method according to the present disclosure preferably includes a treatment liquid applying step of applying, onto the recording medium, a treatment liquid including an aggregating agent capable of forming an aggregate through contact with components of the ink composition.

The treatment liquid applying step may be performed before or after the ink applying step. In the image-forming method according to the present disclosure, the ink applying step is preferably performed after the treatment liquid applying step.

Specifically, the following process is preferred. That is, a treatment liquid for aggregating a colorant (e.g., pigment) and/or polymer particles in the ink composition is applied onto a recording medium before application of the ink composition, and the ink composition is applied so as to be in contact with the treatment liquid that has been applied onto the recording medium. This process can increase the image recording speed, and an image having a high density and a high resolution is formed even through high-speed recording.

An example of the treatment liquid is a liquid composition capable of forming an aggregate by changing the pH of the ink composition. Herein, the pH (25°C) of the treatment liquid is preferably 0 to 6, more preferably 0.3 to 3, and particularly preferably 0.5 to 2 from the viewpoint of the aggregation rate of the ink composition.

The treatment liquid that can be used in the present disclosure is a composition capable of forming an aggregate when contacting the ink composition. Specifically, the treatment liquid includes at least one aggregation component capable of forming an aggregate through aggregation of dispersed particles such as colorants (e.g., the above-described pigment and coloring particles) in the ink composition when the treatment liquid and the ink composition are mixed with each other and may optionally include other components. When a treatment liquid including an aggregation component capable of forming an aggregate through contact with the ink composition is mixed with the ink composition, aggregation of a pigment and the like that stably disperse in the ink composition is facilitated.

The treatment liquid preferably includes at least one acid compound as the aggregation component.

Examples of the acid compound include compounds having a phosphoric acid group, a phosphonic acid group, phosphinic acid group, a sulfuric acid group, a sulfonic acid group, a sulfinic acid group, or a carboxy group and salts (e.g., polyvalent metal salts) thereof. Among them, the acid compound is more preferably a compound having a phosphoric acid group or a carboxy group and further preferably a compound having a carboxy group from the viewpoint of the aggregation rate of the ink composition.

The compound having a carboxy group is preferably selected from the group consisting of polyacrylic acid, acetic acid, glycolic acid, malonic acid, malic acid, maleic acid, ascorbic acid, succinic acid, glutaric acid, fumaric acid, citric acid, tartaric acid, lactic acid, pyrrolidone carboxylic acid, pyrone carboxylic acid, pyrrole carboxylic acid, furan carboxylic acid, pyridine carboxylic acid, coumarinic acid, thiophenecarboxylic acid, nicotinic acid, derivatives thereof, and salts (e.g., polyvalent metal salts) thereof. These compounds having a carboxy group may be used alone or in combination of two or more.

Only one aggregation component may be used or two or more aggregation components may be used as a mixture.

The content of the acid compound in the treatment liquid is preferably 5 to 95 mass% and more preferably 10 to 80 mass% relative to the total mass of the treatment liquid from the viewpoint of aggregation effect.

In addition to the acid compound, the treatment liquid may further include an aqueous solvent (e.g., water and water-soluble organic solvent). Furthermore, various additives such as a surfactant may be appropriately included.

A preferred example of the treatment liquid that improves high-speed aggregation is a treatment liquid to which a polyvalent metal salt or poly(allylamine) is added.

Examples of the polyvalent metal salt include salts of Group 2 alkaline-earth metals (e.g., magnesium and calcium) on the periodic table, Group 3 transition metals (e.g., lanthanum) on the periodic table, cations of Group 13 (e.g., aluminum) on the periodic table, and lanthanides (e.g., neodymium). Preferred metal salts are carboxylates (e.g., salts of formic acid, acetic acid, and benzoic acid), nitrates, chlorides, and thiocyanates. In particular, preferred are the calcium salts or magnesium salts of carboxylic acids (e.g., formic acid, acetic acid, and benzoic acid), the calcium salt or magnesium salt of nitric acid, calcium chloride, magnesium chloride, and the calcium salt or magnesium salt of thiocyanic acid.

Examples of the poly(allylamine) include poly(allylamine) and poly(allylamine) derivatives.

The content of the polyvalent metal salt or poly(allylamine) in the treatment liquid is preferably 1 to 10 mass%, more preferably 1.5 to 7 mass%, and particularly preferably 2 to 6 mass% relative to the total mass of the treatment liquid.

The viscosity of the treatment liquid is preferably 1 to 30 mPa·s, more preferably 1 to 20 mPa·s, further preferably 1 to 15 mPa·s, and particularly preferably 1 to 10 mPa·s from the viewpoint of the aggregation rate of the ink composition.

The viscosity is measured at 20°C using a VISCOMETER TV-22 (manufactured by Toki Sangyo Co., Ltd.).

The surface tension of the treatment liquid is preferably 20 to 60 mN/m, more preferably 20 to 45 mN/m, and further preferably 25 to 40 mN/m from the viewpoint of the aggregation rate of the ink composition.

The surface tension is measured at 25°C using an Automatic Surface Tensiometer CBVP-Z (manufactured by Kyowa Interface Science Co., Ltd.).

The treatment liquid can be applied by a publicly known method such as a coating method, an ink jet method, or an immersion method.

A publicly known coating method that uses, for example, a bar coater, an extrusion die coater, an air doctor coater, a blade coater, a rod coater, a knife coater, a squeeze coater, or a reverse roll coater can be employed.

The details of the ink jet method have been described above.

The amount of the treatment liquid applied is not particularly limited as long as the ink composition can be subjected to aggregation, but is preferably such an amount that the amount of the aggregating agent applied is 0.5 to 4.0 g/m². In particular, the treatment liquid is preferably applied in such an amount that the amount of the aggregating agent applied is 0.9 to 3.75 g/m². When the amount of the aggregating agent applied is 0.5 g/m² or more, high-speed aggregation can be satisfactorily maintained in various applications of the ink composition. The amount of the aggregating agent applied is preferably 4.0 g/m² or less because the surface quality of the recording medium to which the treatment liquid is applied is not adversely affected (e.g., change in gloss).

### Heating and drying step

In the image-forming method according to the present disclosure, the ink applying step is preferably performed after the treatment liquid applying step. The image-forming method preferably further includes a heating and drying step of heating and drying the treatment liquid on the recording medium after the application of the treatment liquid onto the recording medium and before the application of the ink composition. By heating and drying the treatment liquid in advance before the ink applying step, good ink colorability such as bleeding prevention is achieved and a visible image with high color density and good hue can be recorded.

The heating and drying are performed by publicly known heating means such as a heater, blowing means that uses blowing with a dryer or the like, or means achieved by combining the heating means and the blowing means.

Examples of the heating method include a method in which heat is applied with a heater or the like from a surface of the recording medium opposite to the surface onto which the treatment liquid is applied, a method in which warm air or hot air is applied onto the surface of the recording medium onto which the treatment liquid is applied, and a heating method that uses an infrared heater. These methods may be combined with each other to achieve heating.

### Active energy ray irradiation step

The image-recording method according to the present disclosure preferably includes, after the ink applying step, an active energy ray irradiation step of irradiating the ink composition applied onto the recording medium with active energy rays. As a result of irradiation with active energy rays, the polymerizable compound in the ink composition is cured to form a cured film including a colorant. Thus, an image can be fixed.

In the image-forming method according to the present disclosure, examples of the active energy rays include α-rays, γ-rays, electron beams, X-rays, ultraviolet rays (UV), visible light, and infrared light. Among these active energy rays, ultraviolet rays, visible rays, and/or infrared rays are preferably used and ultraviolet rays are more preferably used from the viewpoint of, for example, safety.

The wavelength of the active energy rays is preferably 200 to 600 nm, more preferably 250 to 450 nm, and particularly preferably 250 to 400 nm.

The output of the active energy rays is preferably 5,000 mJ/cm² or less, more preferably 10 to 4,000 mJ/cm², and particularly preferably 20 to 3,000 mJ/cm².

The apparatus capable of radiating active energy rays is, for example, an exposure apparatus that uses, as a light source, an LED lamp, a mercury lamp such as a high-pressure mercury lamp, an ultrahigh-pressure mercury lamp, a deep UV lamp, or a low-pressure UV lamp, an excimer lamp such as a halide lamp, a xenon flash lamp, a metal halide lamp, an ArF excimer lamp, or a KrF excimer lamp, an extreme ultraviolet lamp, electron beams, or an X-ray lamp.

The irradiation with ultraviolet rays can be performed using a typical ultraviolet ray irradiation apparatus such as a commercially available ultraviolet ray irradiation apparatus for curing/adhesion/exposure (e.g., SP9-250UB manufactured by USHIO Inc.).

Alternatively, a light emitting diode (LED) and a laser diode (LD) may be used as a source of active energy rays. LEDs (UV-LEDs) and LDs (UV-LDs), which are small-sized, long-lifetime, high-efficiency, and low-cost devices, are promising for photo-curable ink jet light sources. In particular, when an ultraviolet light source is required, an ultraviolet LED and an ultraviolet LD can be used. For example, NICHIA Corporation markets an ultraviolet LED having a main emission spectrum at a wavelength of 365 nm to 420 nm.

The source of active energy rays used in the image-forming method according to the present disclosure is preferably a mercury lamp or a metal halide lamp.

### Ink drying step

The image-forming method according to the present disclosure may optionally include an ink drying step of removing a solvent (e.g., water and optionally an organic solvent) in the ink composition applied onto the recording medium by performing drying.

The ink drying step may be performed before or after the active energy ray irradiation step as long as the ink drying step is performed after the ink applying step. The ink drying step is preferably performed before the active energy ray irradiation step.

A publicly known ink drying method can be employed as long as at least part of the solvent can be removed. For example, the ink drying method may be heating with a heater or the like, blowing with a dryer or the like, or a combination of heating and blowing.

### Water-soluble photopolymerization initiator

The water-soluble photopolymerization initiator according to the present disclosure is a water-soluble photopolymerization initiator having a structure in which one or more carbonyl groups further directly bond to an aromatic ring of an aromatic acyl group that bonds to a phosphorus atom in an acylphosphine oxide structure.

Preferred examples of the water-soluble photopolymerization initiator according to the present disclosure are the same as those of the particular polymerization initiator described in the aqueous curable composition according to the present disclosure.

The water-soluble photopolymerization initiator according to the present disclosure is preferably a compound represented by formula 1-1 or formula 2-1 below.

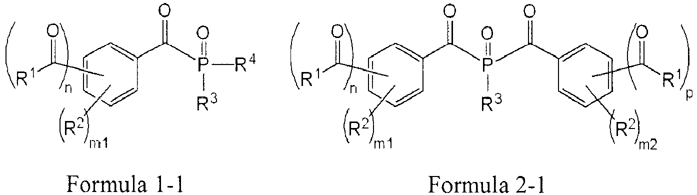

In formula 1-1 and formula 2-1, R¹ each independently represent a group that has one or more groups selected from the group consisting of -⁺N(R)₄, -SO₃⁻, -COO⁻, -PO₃²⁻, and an alkylene oxide group -{(CH₂)ₓO}_{y}- and that has a carbon atom bonding to a carbonyl group in formula 1-1 or formula 2-1; R represents a hydrogen atom, an alkyl group, a phenyl group, or an aralkyl group; x represents an integer of 2 to 6; y represents an integer of 3 to 500; R² each independently represent an alkyl group, an aryl group, or an alkoxy group; m1 each independently represent an integer of 0 to 4; m2 represents an integer of 0 to 5; n each independently represent an integer of 1 to 3; and p represents an integer of 0 to 3.

Preferred examples of the compound represented by formula 1-1 or formula 2-1 in the water-soluble photopolymerization initiator according to the present disclosure are the same as those of the compound represented by formula 1-1 or formula 2-1 that have been described in the aqueous curable composition according to the present disclosure.

The water-soluble photopolymerization initiator according to the present disclosure is more preferably a compound represented by formula 1-2, formula 2-2, formula 1-3, or formula 2-3 below.

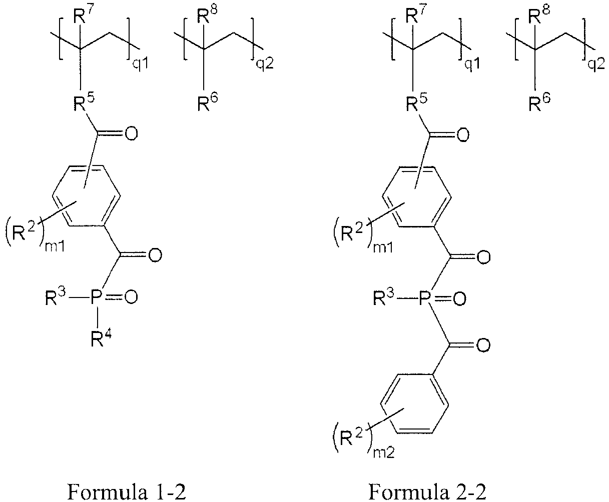

In formula 1-2 and formula 2-2, R² to R⁴ each independently represent an alkyl group, an aryl group, or an alkoxy group; R⁵ each independently represent a single bond or a divalent linking group that links to a polymer main chain and has a carbon atom bonding to a carbonyl group in formula 1-2 or formula 2-2; R⁶ each independently represent a group having one or more groups selected from the group consisting of -⁺N(R)₄, -SO₃⁻, -COO⁻, -PO₃²⁻, and an alkylene oxide group -{(CH₂)ₓO}_{y}-; R represents a hydrogen atom, an alkyl group, a phenyl group, or an aralkyl group; R⁷ and R⁸ each independently represent a hydrogen atom or an alkyl group; x represents an integer of 2 to 6; y represents an integer of 3 to 500; m1 each independently represent an integer of 0 to 4; m2 represents an integer of 0 to 5; and q1 and q2 represent a molar ratio.

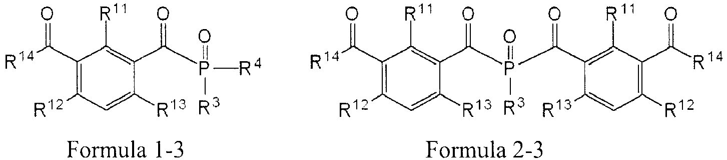

In formula 1-3 and formula 2-3, R³ and R⁴ each independently represent an alkyl group, an aryl group, or an alkoxy group; R¹¹ to R¹³ each independently represent an alkyl group having 1 to 8 carbon atoms, an aryl group having 6 to 20 carbon atoms, or an alkoxy group having 1 to 4 carbon atoms; and R¹⁴ each independently represent a group represented by formula R¹-1 above.

Preferred examples of the compound represented by formula 1-2, formula 2-2, formula 1-3, or formula 2-3 in the water-soluble photopolymerization initiator according to the present disclosure are the same as those of the compound represented by formula 1-2, formula 2-2, formula 1-3, or formula 2-3 that have been described in the aqueous curable composition according to the present disclosure.

### EXAMPLES

Hereafter, the embodiments of the present invention will be more specifically described based on Examples. However, the embodiments of the present invention are not limited to the following Examples. Note that "part" and "%" are on a mass basis unless otherwise specified.

Compounds A-1 to A-25 and B-1 to B-5 used in Examples are the same as the above-described compounds A-1 to A-25 and B-1 to B-5.

### Synthesis of A-1 to A-10

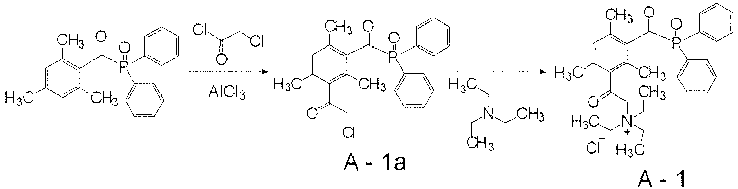

After 133 parts of dichloromethane (CH₂Cl₂) was dissolved in 2,4,6-trimethylbenzoyldiphenylphosphine oxide (30.0 parts, 86.1 molar equivalents, IRGACURE TPO manufactured by BASF), anhydrous aluminum(III) chloride (AlCl₃, 45.9 parts, 344.5 molar equivalents) was added thereto in portions and dissolved by performing stirring. Then, chloroacetyl chloride (57.9 parts, 516.7 molar equivalents) was added dropwise and stirred at room temperature (rt, 10°C to 35°C, the same applies hereafter) for 7 hours. The reaction solution was gradually added dropwise to ice water to stop the reaction, then extracted with ethyl acetate, washed with water, and dried with magnesium sulfate. The resulting filtrate was concentrated, purified using a silica gel column (hexane/ethyl acetate = 50/50 (volume ratio)), concentrated, and then washed with hexane to obtain a white compound A-1a (33.65 parts, yield 92%).

After 33.5 parts of the obtained compound A-1a was dissolved in 45.1 parts of ethyl acetate, triethylamine (8 parts, 78.8 molar equivalents) was added thereto. The precipitated solid was filtered, dried, and washed with a small amount of isopropyl alcohol and hexane to obtain a white compound A-1 (41.45 parts, yield 99%).

Compounds A-2 to A-10 were also synthesized in the same manner, except that the substrate was changed. The synthesis of a compound A-4a that corresponds to the intermediate A-1a in the synthesis of the compound A-1 is shown below as an example.

### Synthesis of A-4a

After 133 parts of dichloromethane (CH₂Cl₂) was dissolved in 2,4,6-trimethylbenzoyldiphenylphosphine oxide (30.0 parts, 86.1 molar equivalents, IRGACURE TPO manufactured by BASF), anhydrous aluminum(III) chloride (AlCl₃, 45.9 parts, 344.5 molar equivalents) was added thereto in portions and dissolved by performing stirring. Then, 3-chloropropionyl chloride (65.6 parts, 516.7 molar equivalents) was added dropwise and stirred at room temperature (rt, 10°C to 35°C, the same applies hereafter) for 7 hours. Purification was performed in the same manner as in the case of the compound A1-a to obtain a compound A-4a (42.0 parts, yield 99%).

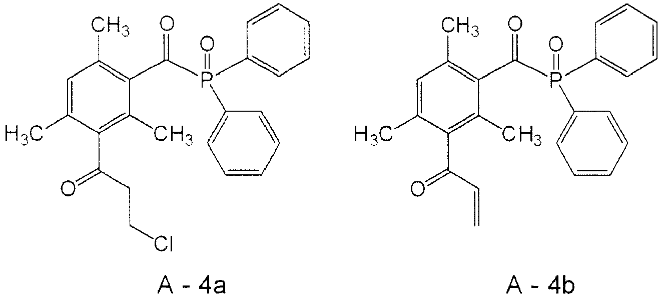

### Synthesis of A-11 to A-15

After 100 parts of dimethyl sulfoxide and sodium 2-hydroxyethanesulfonate (3.48 parts, 23.5 molar equivalents, manufactured by Wako Pure Chemical Industries, Ltd.) were added to the compound A-1a (10 parts, 23.5 molar equivalents) obtained in the same manner, stirring was performed at 90°C for 24 hours. To the reaction solution, 200 parts of a saturated saline solution was added, and liquid-liquid extraction was performed three times using 50 parts of acetonitrile. The resulting extract was dried with magnesium sulfate and then concentrated to obtain a white solid. The obtained white solid was further purified through recrystallization with isopropanol to obtain a compound A-11 (12.6 parts, yield 91%).

Compounds A-12 to A-15 were also synthesized through the same reaction, except that sodium 2-hydroxyethanesulfonate was changed to the corresponding substrate.

### Synthesis of A-17 to A-20

To the compound A-1a (10 parts, 23.5 molar equivalents), 100 parts of dry methanol was added and cesium formate (0.41 parts, manufactured by Aldrich) was added, and reflux was performed for 24 hours. An excess amount of cesium formate was filtered out, and then purification with a silica gel column (hexane/ethyl acetate = 50/50 (volume ratio)) and concentration were performed to obtain a compound A-17a (8.7 parts, yield 99%).

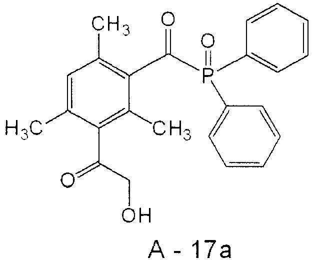

To the compound A-17a (10 parts, 24.6 molar equivalents), 100 parts of tetrahydrofuran and succinic anhydride (2.5 parts, 24.6 molar equivalents) were added, and reflux was performed for 8 hours. The resulting solution was concentrated, then dissolved in acetonitrile, and neutralized with sodium hydroxide (1 N). Subsequently, a saturated saline solution was added thereto and liquid-liquid extraction was performed three times using acetonitrile. Recrystallization with isopropanol was performed to obtain a compound A-17 (11.2 parts, yield 99%).

A compound A-18 was synthesized in the same manner, except that sodium hydroxide in the neutralization was changed to potassium hydroxide.

Compounds A-19 and A-20 were synthesized in the same manner, except that the substrate was changed from succinic anhydride to mercaptopropionic acid.

### Synthesis of A-21

To the compound A-4a (10 parts, 22.8 molar equivalents), 50 parts of ethyl acetate and triethylamine (9.2 parts, 91.2 molar equivalents) were added, and stirring was performed at 50°C for 3 hours. Dilute hydrochloric acid was added thereto for neutralization and then a saturated saline solution was added. Liquid-liquid extraction was performed three times using ethyl acetate. The resulting solution was dried with magnesium sulfate and concentrated to obtain a compound A-4 (9.1 parts, 99%).

To the obtained compound A-4, 50 parts of toluene, polyethylene glycol monomethyl ether 1900 (43.3 parts, 22.8 molar equivalents, manufactured by Wako Pure Chemical Industries, Ltd.), and 0.2 parts of p-toluenesulfonic acid were added, and stirring was performed at 20°C for 48 hours. The obtained solution was concentrated, purified with a silica gel column (hexane/ethyl acetate = 50/50 (volume ratio)), and concentrated to obtain a compound A-21 (50.6 parts, yield 99%).

### Synthesis of A-23 to A-25

A compound A-23a was synthesized in the same manner, except that bis(2,4,6-trimethylbenzoyl)phenylphosphine oxide (manufactured by BASF, IRGACURE 819) was used instead of 2,4,6-trimethylbenzoyldiphenylphosphine oxide of the compound A-1a.

A compound A-23 was synthesized in the same manner as in the case of the compound A-1 using the compound A-23a.

Compounds A-24 and A-25 were also synthesized in the same manner, except that the substrate was changed.

### Synthesis of B-1 to B-5

### Synthesis of A-4b

The compound A-4a (50 parts) was dissolved in 1,070 parts of tetrahydrofuran, and then 36.3 parts of triethylamine was added thereto and stirring was performed at 70°C for 2 hours. After the reaction, the precipitated salt was filtered. Then, the resulting filtrate was concentrated and purified with a silica gel column (hexane/ethyl acetate = 40/60 (volume ratio)) to quantitatively obtain a target yellow oily compound A-4b (vinyl ketone compound, the above-described compound).

### Synthesis of B-1

In a nitrogen atmosphere, 16.1 parts of methyl ethyl ketone was stirred at an external temperature of 70°C. To the methyl ethyl ketone, 5.00 parts (12.4 molar equivalents) of the raw material compound A-4b, which was dissolved in 64.4 parts of methyl ethyl ketone, 1.49 parts (3.1 molar equivalents) of Blemmer AME400 (methoxypolyethylene glycol monoacrylate, manufactured by NOF Corporation), and 0.571 parts of (2.48 molar equivalents) of 2,2'-azobis(2,4-dimethylvaleronitrile) were added dropwise over 2 hours and then stirring was performed for 8 hours. The resulting product was left to cool to room temperature, then crystallized with hexane, filtered, and dried to obtain 6.3 g of a compound B-1. The composition of the obtained polymer was determined by ¹H NMR and the molecular weight was measured by GPC (Mw = 5,500).

### Synthesis of B-2 to B-5

Compounds B-2 to B-5 were also synthesized in the same manner as in the case of the compound B-1, except that the types of monomers and the amounts of the monomers used were changed to those listed in Table 1.

Hereafter, methods for synthesizing compounds A-5a and A-5b will be described.

### Synthesis of A-5a

After 133 parts of dichloromethane (CH₂Cl₂) was dissolved in bis(2,4,6-trimethylbenzoyl)phenylphosphine oxide (30.0 parts, 71.6 molar equivalents, IRGACURE 819 manufactured by BASF), anhydrous aluminum(III) chloride (AlCl₃, 28.7 parts, 215.0 molar equivalents) was added thereto in portions and dissolved by performing stirring. Then, 3-chloropropionyl chloride (10.9 parts, 85.9 molar equivalents) was added dropwise and stirred at room temperature for 7 hours. Purification was performed in the same manner as in the case of the compound A-1a to obtain a compound A-5a (21.0 parts, yield 62%).

### Synthesis of A-5b

A compound A-5b (vinyl ketone compound) was synthesized in the same manner as in the case of the compound A-4b, except that the compound A-5a was used instead of the compound A-4a.

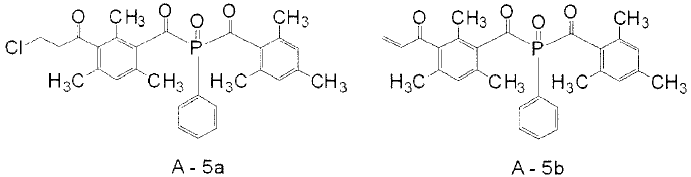

**Table 1**

| | Monomer A | Monomer B |
|---|---|---|
| B-1 | A-4b | Blemmer AME400 |
| B-2 | A-4b | dimethylaminopropylacrylamide methyl chloride quaternary salt |
| B-3 | 2-(3-((diphenylphosphoryl)carbonyl)-2,6-dimethylphenyl)-2-oxoethyl acrylate | dimethylaminopropylacrylamide methyl chloride quaternary salt |
| B-4 | 2-(3-(3-((diphenylphosphoryl)carbonyl)-2,6-dimethylphenyl)-3-oxopropoxy)ethylacrylate | dimethylaminopropylacrylamide methyl chloride quaternary salt |
| B-5 | A-5b | Blemmer AME400 |

### Synthesis of polymer dispersant P-l

To a three-necked flask equipped with a stirrer and a condenser, 88 parts of methyl ethyl ketone was added and heated to 72°C in a nitrogen atmosphere. A solution prepared by dissolving 0.85 parts of dimethyl 2,2'-azobisisobutyrate, 60 parts of benzyl methacrylate, 10 parts of methacrylic acid, and 30 parts of methyl methacrylate in 50 parts of methyl ethyl ketone was added dropwise to the flask over 3 hours. After the dropwise addition, the reaction was further caused to proceed for 1 hour. Then, a solution prepared by dissolving 0.42 parts of dimethyl 2,2'-azobisisobutyrate in 2 parts of methyl ethyl ketone was added thereto. The temperature was increased to 78°C and heating was performed for 4 hours. The resulting reaction solution was reprecipitated twice using a large excess amount of hexane. The precipitated resin was dried to obtain 96 parts of a polymer dispersant P-1.

The composition of the obtained resin was determined by ¹H-NMR, and the weight-average molecular weight (Mw) determined by GPC was 44,600. Furthermore, the acid value was determined by a method specified in the JIS standard (JIS K0070:1992). The acid value was 65.2 mgKOH/g.

### Preparation of resin-coated magenta pigment dispersion

Ten parts by mass of Chromophthal Jet Magenta DMQ (Pigment Red 122, manufactured by BASF Japan), 5 parts by mass of the polymer dispersant P-1, 42 parts by mass of methyl ethyl ketone, 5.5 parts by mass of a 1 mol/L aqueous NaOH solution, and 87.2 parts by mass of ion-exchanged water were mixed and dispersed in a bead mill using 0.1 mmφ zirconia beads for 2 to 6 hours.

Methyl ethyl ketone was removed from the obtained dispersion under a reduced pressure at 55°C. Furthermore, part of water was removed to obtain a resin-coated magenta pigment dispersion (coloring particles) having a pigment concentration of 10.2 mass%.

### Examples 1 to 30 and Comparative Examples 1 and 2

### Preparation of aqueous curable compositions 1 to 32 (aqueous magenta inks 1 to 32)

Aqueous magenta inks 1 to 30 and comparative aqueous magenta inks 31 and 32 were prepared in the following manner.

The resin-coated magenta pigment dispersion, ion-exchanged water, a polymerization initiator, a polymerizable compound, and a surfactant were mixed with each other so as to have the following ink composition, and then the resulting mixture was filtered with a 5 µm membrane filter to prepare aqueous magenta inks 1 to 32. The pH of each ink was 7.5.

### Ink composition (mass%)

Water-soluble photopolymerization initiator (a compound listed in Table 2): 5 mass%
Monomer 1 (N-[Tris(3-acrylamidopropoxymethyl)methyl]acrylamide, manufactured by Wako Pure Chemical Industries, Ltd.): 10 mass%
Monomer 2 (N,N'-Methylenebis(acrylamide), manufactured by Wako Pure Chemical Industries, Ltd.): 10 mass%
Colorant (the resin-coated magenta pigment dispersion): 6 mass%
Water-soluble solvent (propylene glycol): 5 mass%
Surfactant (Olfine E1010 manufactured by Nissin Chemical Co., Ltd.): 1 mass%
Water: 63 mass% (added so as to have a total amount of 100 mass%)

### Image-forming method

As illustrated in FIG, provided was an ink jet apparatus sequentially including, in a conveyance direction (an arrow direction in the drawing) of a recording medium, an ink ejection unit 14, an ink drying zone 15, and an ultraviolet ray irradiation unit 16 equipped with an ultraviolet lamp 16S.

The ink ejection unit 14 includes a black ink ejection head 30K, a cyan ink ejection head 30C, a magenta ink ejection head 30M, and a yellow ink ejection head 30Y sequentially arranged in the conveyance direction (the arrow direction). Each of the heads is a 1,200 dpi/10 inch-width full line head (driving frequency: 25 kHz, conveyance speed of recording medium: 530 mm/sec) that ejects an ink of the corresponding color in a main scanning direction so as to record an image with a single pass. Note that 1 inch = 2.54 cm and dpi refers to dot per inch.

Any of storage tanks (not illustrated) connected to the ink ejection heads 30K, 30C, 30M, and 30Y of the ink jet recording apparatus was filled with an ink composition of the corresponding color. The recording medium was "OK Top Coat Plus" (basis weight 104.7 g/m²) manufactured by Oji Paper Co., Ltd.

A line image or a solid image was recorded by ejecting a treatment liquid and the ink composition at a resolution of 1,200 dpi × 600 dpi in an ink-droplet amount of 3.5 pl. Herein, the line image was recorded by ejecting the treatment liquid and the ink composition in a main scanning direction so that a 1-dot line, a 2-dot line, and a 4-dot line of 1,200 dpi were formed with a single pass. The solid image was recorded so as to have a size of 104 mm × 140 mm by ejecting the treatment liquid and the ink composition onto a recording medium cut to A5 size. The amount of the treatment liquid applied onto the recording medium was 5 ml/m².

The image was recorded as follows. First, an aqueous magenta ink was ejected from the ink ejection head 30M onto the recording medium with a single pass to record an image. In the ink drying zone 15, the image was then dried in the same manner as above by sending 120°C hot air at 5 m/sec to the recorded surface for 15 seconds using a blower while heating the image using an infrared heater from the back side (back) of a surface on which ink droplets landed. After the image was dried, the image was fixed in the ultraviolet ray irradiation unit 16 by being irradiated with UV light (metal halide lamp manufactured by EYE GRAPHICS Co., Ltd., maximum irradiation wavelength 365 nm) so that a total dose of 600 mJ/cm² was achieved. Thus, an evaluation sample was obtained.

### Evaluation of curing properties (sensitivity evaluation)

An unprinted Tokubishi Art Double-sided N (manufactured by Mitsubishi Paper Mills Limited) was wound around a paperweight (mass 470 g, size 15 mm × 30 mm × 120 mm) (the contact area between the unprinted Tokubishi Art Double-sided N and the evaluation sample was 150 mm²). The printed surface of the evaluation sample was rubbed back and forth three times (corresponding to a load of 260 kg/m²). The printed surface after rubbing was observed through visual inspection and evaluated on the basis of the following evaluation criteria.

### Evaluation criteria

A: The image on the printed surface was not separated.
B: The image on the printed surface was slightly separated.
C: The image on the printed surface was separated at a practically unacceptable level.

### Evaluation of discharge performance

An image was formed by the same image-forming method as that performed in the evaluation of curing properties. After the ink ejection, the ejection head was left to stand for 5 minutes to 45 minutes at a five-minute interval, and ejection was performed again on a new recording medium placed on a stage under the same conditions to print a line. The standing time at which all the 96 nozzles were able to eject 2,000 droplets was determined, and the discharge performance was evaluated on the basis of the following evaluation criteria. The longer the standing time, the higher the discharge performance.

### Evaluation criteria

AA: After a standing time of 45 minutes, all the nozzles can eject droplets.
A: At a standing time of 30 minutes or longer and shorter than 45 minutes, some nozzles cannot eject droplets.
B: At a standing time of 20 minutes or longer and shorter than 30 minutes, some nozzles cannot eject droplets.
C: At a standing time of shorter than 20 minutes, some nozzles cannot eject droplets.

### Evaluation of safety (migration evaluation)

The surface of the evaluation sample was laminated with a low-density polyethylene film having a thickness of 5 µm. A hemispherical container containing 100 mL of a mixed solution of water:ethanol = 70:30 was placed on the evaluation sample so that the polyethylene film was in contact with the mixed solution. The hemispherical container was closely fixed to the evaluation sample to prevent leakage. Then, the evaluation sample was left to stand at 40°C for 10 days with the hemispherical container placed thereon. Subsequently, the total elution amount (overall migration limit: OML) from the printed matter in the water-ethanol mixed solution was determined, and evaluation was performed with five ranks of A to E. The total elution amount was measured by performing corona CAD (charged aerosol detector) detection using liquid chromatography (Nexera X2 (manufactured by SHIMADZU Corporation)) of remaining components.

### Evaluation criteria

A: The elution amount is 1 ppm/dm² or less.
B: The elution amount is more than 1 ppm/dm² and 20 ppm/dm² or less.
C: The elution amount is more than 20 ppm/dm² and 100 ppm/dm² or less.
D: The elution amount is more than 100 ppm/dm² and 1,000 ppm/dm² or less.
E: The elution amount is more than 1,000 ppm/dm².

Table 2 collectively shows the evaluation results.

**Table 2**

| | Water-soluble photopolymerization initiator | Sensitivity | Safety | Discharge performance |
|---|---|---|---|---|
| Example 1 | A-1 | A | A | A |
| Example 2 | A-2 | A | A | A |
| Example 3 | A-3 | A | A | A |
| Example 4 | A-4 | A | A | A |
| Example 5 | A-5 | A | A | A |
| Example 6 | A-6 | A | A | A |
| Example 7 | A-7 | A | A | A |
| Example 8 | A-8 | A | A | A |
| Example 9 | A-9 | A | A | A |
| Example 10 | A-10 | A | A | A |
| Example 11 | A-11 | A | A | A |
| Example 12 | A-12 | A | A | A |
| Example 13 | A-13 | A | A | A |
| Example 14 | A-14 | A | A | A |
| Example 15 | A-15 | A | A | A |
| Example 16 | A-16 | A | A | A |
| Example 17 | A-17 | A | A | A |
| Example 18 | A-18 | A | A | A |
| Example 19 | A-19 | A | A | A |
| Example 20 | A-20 | A | A | A |
| Example 21 | A-21 | B | A | A |
| Example 22 | A-22 | B | A | A |
| Example 23 | A-23 | A | A | A |
| Example 24 | A-24 | A | A | A |
| Example 25 | A-25 | A | A | A |
| Example 26 | B-1 | B | A | B |
| Example 27 | B-2 | A | A | B |
| Example 28 | B-3 | A | A | B |
| Example 29 | B-4 | A | A | B |
| Example 30 | B-5 | B | A | B |
| Comparative Example 1 | IRGACURE 2959 | C | D | A |
| Comparative Example 2 | Comparative compound 1 | B | C | C |

The water-soluble photopolymerization initiator used in Comparative Examples 1 and 2 in Table 2 are as follows.

IRGACURE 2959: the compound below manufactured by BASF, solubility in water: 2 mass%

### Comparative compound 1: the compound below

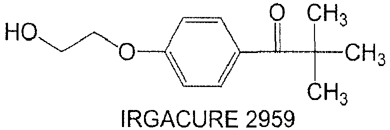

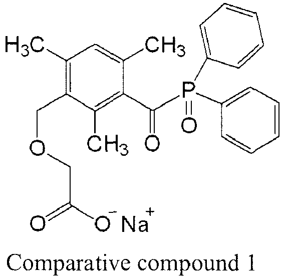

### Examples 31 to 40

Aqueous magenta inks in Examples 31 to 40 were prepared in the same manner as in Example 1, except that the types and amounts of monomers and the types and amounts of water-soluble photopolymerization initiators were changed to those listed in Table 3 below. The pH of each ink was 7.5.

The image formation and the evaluations were performed in the same manner as in Example 1 using the prepared aqueous magenta ink. Table 3 collectively shows the evaluation results.

**Table 3**

| | Monomer 1 | | Monomer 2 | | Water-soluble photopolymerization initiator | | Sensitivity | Safety | Discharge performance |
|---|---|---|---|---|---|---|---|---|---|
| | Type | Amount (part by mass) | Type | Amount (part by mass) | Type | Amount (part by mass) | | | |
| Example 31 | N-[Tris(3-acryl-amidopropoxymethyl)-methyl]acrylamide | 10 | N,N'-Methylene bis(acrylamide) | 10 | A-1 | 0.1 | B | C | A |
| Example 32 | N-[Tris(3-acryl-amidopropoxymethyl)-methyl] acrylamide | 10 | N,N'-Methylene bis(acrylamide) | 10 | A-1 | 1 | B | B | A |
| Example 33 | N-[Tris(3-acryl-amidopropoxymethyl)-methyl]acrylamide | 10 | N,N'-Methylene bis(acrylamide) | 10 | A-1 | 3 | A | A | A |
| Example 34 | N-[Tris(3-acryl-amidopropoxymethyl)-methyl]acrylamide | 10 | N,N'-Methylene bis(acrylamide) | 10 | A-1 | 10 | A | A | A |
| Example 35 | N-[Tris(3-acryl-amidopropoxymethyl)-methyl]acrylamide | 3 | N,N'-Methylene bis(acrylamide) | 3 | A-1 | 5 | B | A | A |
| Example 36 | N-[Tris(3-acryl-amidopropoxymethyl)-methyl]acrylamide | 5 | N,N'-Methylene bis(acrylamide) | 5 | A-1 | 5 | A | A | A |
| Example 37 | N-[Tris(3-acryl-aminopropoxymethyl)-methyl]acrylamide | 20 | N,N'-Methylene bis(acrylamide) | 20 | A-1 | 5 | A | A | B |
| Example 38 | Blemmer ADE400A | 10 | acryloylmorpholine | 10 | A-1 | 5 | A | A | A |
| Example 39 | Blemmer ADE400A | 10 | acryloylmorpholine | 10 | A-2 | 5 | A | A | A |
| Example 40 | Blemmer ADE400A | 10 | acryloylmorpholine | 10 | A-3 | 5 | A | A | A |

The details of the monomers listed in Table 3 other than the above-described monomers are as follows.

Blemmer ADE400A (polyethylene glycol diacrylate, manufactured by NOF Corporation)
Acryloylmorpholine (manufactured by KJ Chemicals Corporation)

## Claims

1. An aqueous curable composition comprising:
a water-soluble photopolymerization initiator having a structure in which one or more carbonyl groups further directly bond to an aromatic ring of an aromatic acyl group that bonds to a phosphorus atom in an acylphosphine oxide structure;
water; and
a polymerizable compound.

2. The aqueous curable composition according to claim 1, wherein the water-soluble photopolymerization initiator has a nonionic group or an ionic group selected from the group consisting of an ammonium group, a sulfonic acid group, a carboxylic acid group, a phosphonic acid group, a phosphinic acid group, and salts thereof.

3. The aqueous curable composition according to claim 1 or 2, wherein the water-soluble photopolymerization initiator is a compound having a partial structure represented by formula 1 or formula 2 below: 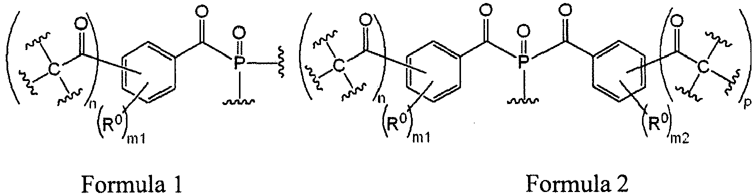 where R° each independently represent an alkyl group, an aryl group, or an alkoxy group; ml each independently represent an integer of 0 to 4; m2 represents an integer of 0 to 5; n each independently represent an integer of 1 to 3; p represents an integer of 0 to 3; and wavy lines each represent a bonding position with another structure.

4. The aqueous curable composition according to any one of claims 1 to 3, wherein the water-soluble photopolymerization initiator is a compound represented by formula 1-1 or formula 2-1 below: 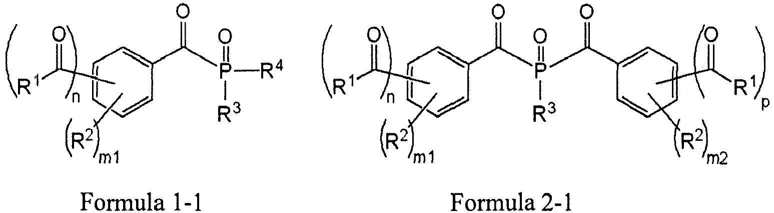 where R¹ each independently represent a group that has one or more groups selected from the group consisting of -⁺N(R)₄, -SO₃⁻, -COO⁻, -PO₃²⁻, and an alkylene oxide group - {(CH₂)ₓO}_{y}- and that has a carbon atom bonding to a carbonyl group in formula 1-1 or formula 2-1; R represents a hydrogen atom, an alkyl group, a phenyl group, or an aralkyl group; x represents an integer of 2 to 6; y represents an integer of 3 to 500; R² to R⁴ each independently represent an alkyl group, an aryl group, or an alkoxy group; m1 each independently represent an integer of 0 to 4; m2 represents an integer of 0 to 5; n each independently represent an integer of 1 to 3; and p represents an integer of 0 to 3.

5. The aqueous curable composition according to any one of claims 1 to 4, wherein the water-soluble photopolymerization initiator is a compound represented by formula 1-2 or formula 2-2 below: 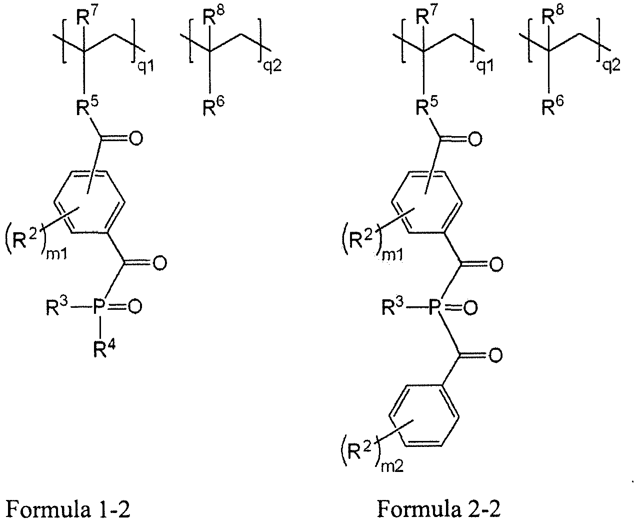 where R² to R⁴ each independently represent an alkyl group, an aryl group, or an alkoxy group; R⁵ each independently represent a single bond or a divalent linking group that links to a polymer main chain and has a carbon atom bonding to a carbonyl group in formula 1-2 or formula 2-2; R⁶ each independently represent a group having one or more groups selected from the group consisting of -⁺N(R)₄, -SO₃⁻, -COO⁻, -PO₃²⁻, and an alkylene oxide group -{(CH₂)ₓO}_{y}⁻; R represents a hydrogen atom, an alkyl group, a phenyl group, or an aralkyl group; R⁷ and R⁸ each independently represent a hydrogen atom or an alkyl group; x represents an integer of 2 to 6; y represents an integer of 3 to 500; m1 each independently represent an integer of 0 to 4; m2 represents an integer of 0 to 5; and q1 and q2 represent a molar ratio.

6. The aqueous curable composition according to any one of claims 1 to 5, wherein a content of the water-soluble photopolymerization initiator is 0.1 to 40.0 mass% relative to a total mass of the polymerizable compound included in the aqueous curable composition.

7. The aqueous curable composition according to any one of claims 1 to 6, wherein a content of the water is 19 to 90 mass% relative to a total mass of the aqueous curable composition.

8. The aqueous curable composition according to any one of claims 1 to 7, wherein the polymerizable compound is a water-soluble compound.

9. The aqueous curable composition according to any one of claims 1 to 8, further comprising a colorant.

10. The aqueous curable composition according to any one of claims 1 to 9, wherein the aqueous curable composition is an ink jet aqueous ink composition.

11. The aqueous curable composition according to claim 4, wherein R³ and R⁴ each independently represent an alkyl group having 1 to 8 carbon atoms, an aryl group having 6 to 20 carbon atomy, or an alkoxy group having 1 to 4 carbon atoms.

12. A water-soluble photopolymerization initiator comprising a compound represented by formula 1-1 or formula 2-1 below: 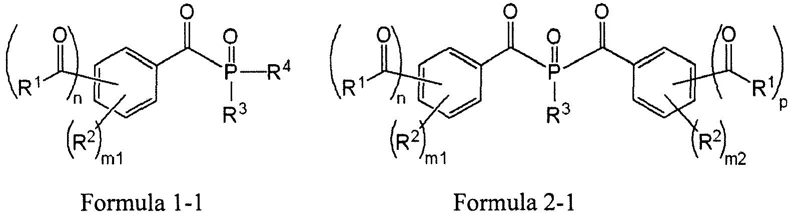 where R¹ each independently represent a group that has one or more groups selected from the group consisting of -⁺N(R)₄, -SO₃⁻, -COO⁻, -PO₃²⁻, and an alkylene oxide group - {(CH₂)ₓO}_{y}- and that has a carbon atom bonding to a carbonyl group in formula 1-1 or formula 2-1; R represents a hydrogen atom, an alkyl group, a phenyl group, or an aralkyl group; x represents an integer of 2 to 6; y represents an integer of 3 to 500; R² to R⁴ each independently represent an alkyl group, an aryl group, or an alkoxy group; m1 each independently represent an integer of 0 to 4; m2 represents an integer of 0 to 5; n each independently represent an integer of 1 to 3; and p represents an integer of 0 to 3.

13. The water-soluble photopolymerization initiator according to claim 12, wherein the water-soluble photopolymerization initiator is a compound represented by formula 1-2, formula 2-2, formula 1-3, or formula 2-3 below: 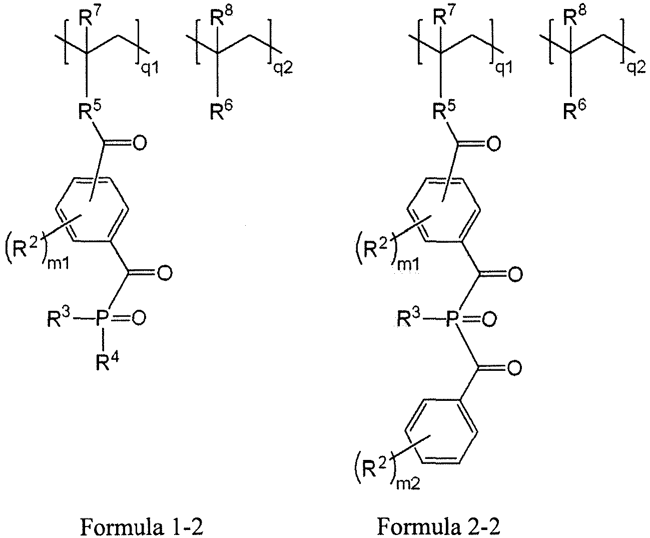 where R² to R⁴ each independently represent an alkyl group, an aryl group, or an alkoxy group; R⁵ each independently represent a single bond or a divalent linking group that links to a polymer main chain and has a carbon atom bonding to a carbonyl group in formula 1-2 or formula 2-2; R⁶ each independently represent a group having one or more groups selected from the group consisting of -⁺N(R)₄, -SO₃⁻, -COO⁻, -PO₃²⁻, and an alkylene oxide group -{(CH₂)ₓO}_{y}-; R represents a hydrogen atom, an alkyl group, a phenyl group, or an aralkyl group; R⁷ and R⁸ each independently represent a hydrogen atom or an alkyl group; x represents an integer of 2 to 6; y represents an integer of 3 to 500; m1 each independently represent an integer of 0 to 4; m2 represents an integer of 0 to 5; and q1 and q2 represent a molar ratio, 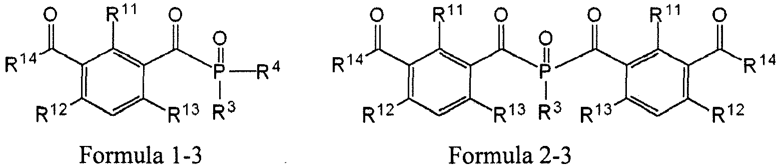 where R³ and R⁴ each independently represent an alkyl group, an aryl group, or an alkoxy group; R¹¹ to R¹³ each independently represent an alkyl group having 1 to 8 carbon atoms, an aryl group having 6 to 20 carbon atoms, or an alkoxy group having 1 to 4 carbon atoms; and R¹⁴ each independently represent a group represented by formula R¹-1 below, 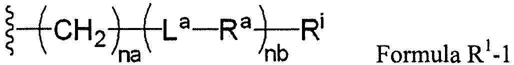 where na represents 1 or 2; nb represents 0 or 1; L^{a} represents an ether bond, an ester bond, or a thioether bond; R^{a} represents an alkylene group having 1 to 10 carbon atoms; Rⁱ represents a group having a group selected from the group consisting of -⁺N(R)₄, -SO₃⁻, - COO⁻, -PO₃²⁻, and -NR-CH₂-COO⁻ and a counterion or an alkylene oxide group -{O(CH₂)ₓ}_{y}-R^{t}; R^{t} represents a hydroxy group or an alkoxy group; and wavy lines each represent a bonding position with a carbonyl group in formula 1-3 or formula 2-3.

14. The water-soluble photopolymerization initiator according to claim 12, wherein R³ and R⁴ each independently represent an alkyl group having 1 to 8 carbon atoms, an aryl group having 6 to 20 carbon atomy, or an alkoxy group having 1 to 4 carbon atoms.

## Patentansprüche

1. Wässrige härtbare Zusammensetzung umfassend:
einen wasserlöslichen Photopolymerisationsinitiator mit einer Struktur, in der eine oder mehrere Carbonylgruppen weiterhin direkt an einen aromatischen Ring einer aromatischen Acylgruppe, die an ein Phosphoratom in einer Acylphosphinoxidstruktur bindet, bindet;
Wasser; und
eine polymerisierbare Verbindung.

2. Wässrige härtbare Zusammensetzung nach Anspruch 1, wobei der wasserlösliche Photopolymerisationsinitiator eine nichtionische Gruppe oder eine ionische Gruppe, ausgewählt aus der Gruppe bestehend aus einer Ammoniumgruppe, einer Sulfonsäuregruppe, einer Carboxylsäuregruppe, einer Phosphonsäuregruppe, einer Phosphinsäuregruppe und Salzen davon, umfasst.

3. Wässrige härtbare Zusammensetzung nach Anspruch 1 oder 2, wobei der wasserlösliche Photopolymerisationsinitiator eine Verbindung mit einer durch die nachstehende Formel 1 oder Formel 2 dargestellten Teilstruktur ist: 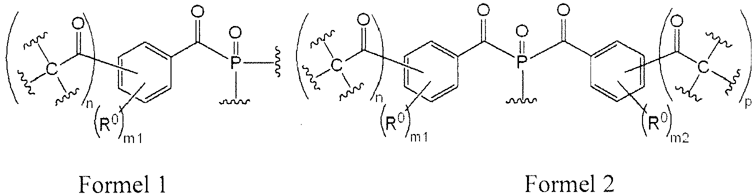 wobei R° jeweils unabhängig eine Alkylgruppe, eine Arylgruppe oder eine Alkoxygruppe darstellt; m1 jeweils unabhängig eine ganze Zahl von 0 bis 4 darstellen; m2 eine ganze Zahl von 0 bis 5 darstellt; n jeweils unabhängig eine ganze Zahl von 1 bis 3 darstellen; p eine ganze Zahl von 0 bis 3 darstellt; und gewellte Linien jeweils eine Bindungsposition mit einer weiteren Struktur darstellen.

4. Wässrige härtbare Zusammensetzung nach einem der Ansprüche 1 bis 3, wobei der wasserlösliche Photopolymerisationsinitiator eine durch die nachstehende Formel 1-1 oder Formel 2-1 dargestellte Verbindung ist: 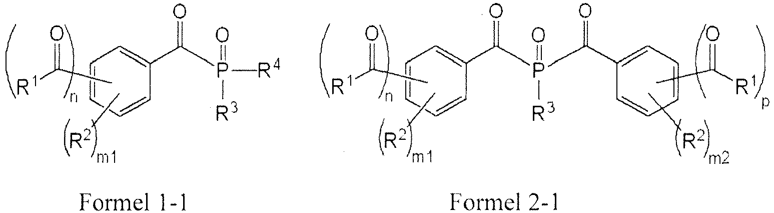 wobei R¹ jeweils unabhängig eine Gruppe mit einer oder mehreren Gruppen, ausgewählt aus der Gruppe bestehend aus -⁺N(R)₄, -SO₃⁻, -COO⁻. -PO₃²⁻ und einer Alkylenoxidgruppe -{(CH₂)ₓO}_{y}- darstellen, und die ein Kohlenstoffatom hat, das an eine Carbonylgruppe in Formel 1-1 oder Formel 2-1 bindet; R ein Wasserstoffatom, eine Alkylgruppe, eine Phenylgruppe oder eine Aralkylgruppe darstellt; x eine ganze Zahl von 2 bis 6 darstellt; y eine ganze Zahl von 3 bis 500 darstellt; R² bis R⁴ jeweils unabhängig eine Alkylgruppe, eine Arylgruppe oder eine Alkoxygruppe darstellen; m1 jeweils unabhängig eine ganze Zahl von 0 bis 4 darstellen; m2 eine ganze Zahl von 0 bis 5 darstellt; n jeweils unabhängig eine ganze Zahl von 1 bis 3 darstellt; und p eine ganze Zahl von 0 bis 3 darstellt.

5. Wässrige härtbare Zusammensetzung nach einem der Ansprüche 1 bis 4, wobei der wasserlösliche Photopolymerisationsinitiator eine durch die nachstehende Formel 1-2 oder Formel 2-2 dargestellte Verbindung ist: 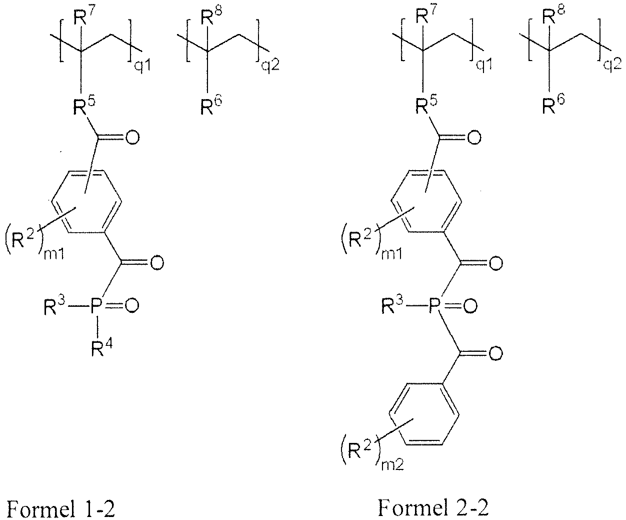 wobei R² bis R⁴ jeweils unabhängig eine Alkylgruppe, eine Arylgruppe oder eine Alkoxygruppe darstellen; R⁵ jeweils unabhängig eine Einfachbindung oder eine divalente Verbindungsgruppe darstellen, die an eine Polymerhauptkette bindet und ein Kohlenstoffatom hat, das an eine Carbonylgruppe in Formel 1-2 oder Formel 2-2 bindet; R⁶ jeweils unabhängig eine Gruppe mit einer oder mehr Gruppen, ausgewählt aus der Gruppe bestehend aus -⁺N(R)₄, -SO₃⁻, -COO⁻, -PO₃²⁻ und einer Alkylenoxidgruppe -{(CH₂)ₓO}_{y}- darstellen; R ein Wasserstoffatom, eine Alkylgruppe, einer Phenylgruppe oder eine Aralkylgruppe darstellt; R⁷ und R⁸ jeweils unabhängig ein Wasserstoffatom oder eine Alkylgruppe darstellen; x eine ganze Zahl von 2 bis 6 darstellt; y eine ganze Zahl von 3 bis 500 darstellt; m1 jeweils unabhängig eine ganze Zahl von 0 bis 4 darstellen; m2 eine ganze Zahl von 0 bis 5 darstellt; und q1 und q2 ein molares Verhältnis darstellen.

6. Wässrige härtbare Zusammensetzung nach einem der Ansprüche 1 bis 5, wobei ein Gehalt an dem wasserlöslichen Photopolymerisationsinitiator 0,1 bis 40,0 Masse%, bezogen auf eine Gesamtmasse an der in der wässrigen härtbaren Zusammensetzung enthaltenen polymerisierbaren Verbindung, beträgt.

7. Wässrige härtbare Zusammensetzung nach einem der Ansprüche 1 bis 6, wobei ein Gehalt an Wasser 19 bis 90 Masse%, bezogen auf eine Gesamtmasse der wässrigen härtbaren Zusammensetzung, beträgt.

8. Wässrige härtbare Zusammensetzung nach einem der Ansprüche 1 bis 7, wobei die polymerisierbare Verbindung eine wasserlösliche Verbindung ist.

9. Wässrige härtbare Zusammensetzung nach einem der Ansprüche 1 bis 8, ferner umfassend ein Färbemittel.

10. Wässrige härtbare Zusammensetzung nach einem der Ansprüche 1 bis 9, wobei die wässrige härtbare Zusammensetzung eine wässrige Tintenstrahltintenzusammensetzung ist.

11. Wässrige härtbare Zusammensetzung nach Anspruch 4, wobei R³ und R⁴ jeweils unabhängig eine Alkylgruppe mit 1 bis 8 Kohlenstoffatomen, eine Arylgruppe mit 6 bis 20 Kohlenstoffatomen oder eine Alkoxygruppe mit 1 bis 4 Kohlenstoffatomen darstellen.

12. Wasserlöslicher Photopolymerisationsinitiator umfassend eine durch nachstehende Formel 1-1 oder Formel 2-1 dargestellte Verbindung: 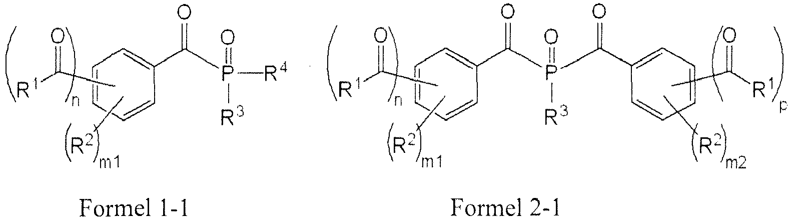 wobei R¹ jeweils unabhängig eine Gruppe mit einer oder mehreren Gruppen, ausgewählt aus der Gruppe bestehend aus -⁺N(R)₄, -SO₃⁻, -COO⁻, -PO₃²⁻ und einer Alkylenoxidgruppe - {(CH₂)ₓO}_{y}- darstellen, und die ein Kohlenstoffatom hat, das an eine Carbonylgruppe in Formel 1-1 oder Formel 2-1 bindet; R ein Wasserstoffatom, eine Alkylgruppe, eine Phenylgruppe oder eine Aralkylgruppe darstellt; x eine ganze Zahl von 2 bis 6 darstellt; y eine ganze Zahl von 3 bis 500 darstellt; R² bis R⁴ jeweils unabhängig eine Alkylgruppe, eine Arylgruppe oder eine Alkoxygruppe darstellen; m1 jeweils unabhängig eine ganze Zahl von 0 bis 4 darstellen; m2 eine ganze Zahl von 0 bis 5 darstellt; n jeweils unabhängig eine ganze Zahl von 1 bis 3 darstellen; und p eine ganze Zahl von 0 bis 3 darstellt.

13. Wasserlöslicher Photopolymerisationsinitiator nach Anspruch 12, wobei der wasserlösliche Photopolymerisationsinitiator eine durch die nachstehende Formel 1-2, Formel 2-2, Formel 1-3 oder Formel 2-3 dargestellte Verbindung ist: 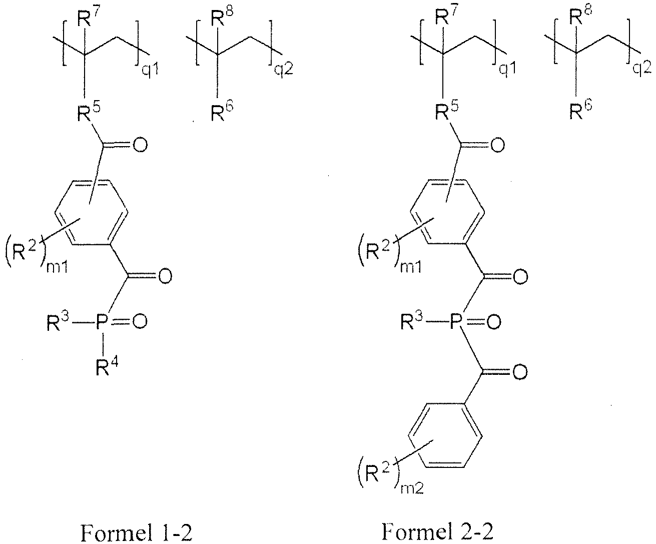 wobei R² bis R⁴ jeweils unabhängig eine Alkylgruppe, eine Arylgruppe oder eine Alkoxygruppe darstellen; R⁵ jeweils unabhängig eine Einfachbindung oder eine divalente Verbindungsgruppe darstellen, die an eine Polymerhauptkette bindet und ein Kohlenstoffatom hat, das an eine Carbonylgruppe in Formel 1-2 oder Formel 2-2 bindet; R⁶ jeweils unabhängig eine Gruppe mit einer oder mehreren Gruppen, ausgewählt aus der Gruppe bestehend aus -⁺N(R)₄, -SO₃⁻, -COO⁻, -PO₃²⁻ und einer Alkylenoxidgruppe -{(CH₂)ₓO}_{y}- darstellen; R ein Wasserstoffatom, eine Alkylgruppe, eine Phenylgruppe oder eine Aralkylgruppe darstellt; R⁷ und R⁸ jeweils unabhängig ein Wasserstoffatom oder eine Alkylgruppe darstellen; x eine ganze Zahl von 2 bis 6 darstellt; y eine ganze Zahl von 3 bis 500 darstellt; m1 jeweils unabhängig eine ganze Zahl von 0 bis 4 darstellen; m2 eine ganze Zahl von 0 bis 5 darstellt; und q1 und q2 ein molares Verhältnis darstellen 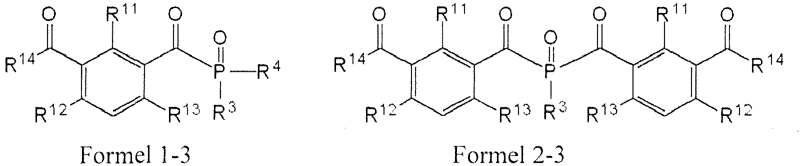 wobei R³ und R⁴ jeweils unabhängig eine Alkylgruppe, eine Arylgruppe oder eine Alkoxygruppe darstellen; R¹¹ bis R¹³ jeweils unabhängig eine Alkylgruppe mit 1 bis 8 Kohlenstoffatomen, eine Arylgruppe mit 6 bis 20 Kohlenstoffatomen oder eine Alkoxygruppe mit 1 bis 4 Kohlenstoffatomen darstellen; und R¹⁴ jeweils unabhängig eine durch nachstehende Formel R¹-1 dargestellte Gruppe darstellen, 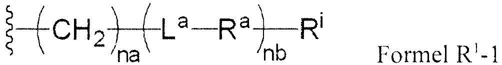 wobei na 1 oder 2 darstellt; nb 0 oder 1 darstellt; L^{a} eine Etherbindung, eine Esterbindung oder eine Thioetherbindung darstellt; R^{a} eine Alkylengruppe mit 1 bis 10 Kohlenstoffatomen darstellt; Rⁱ eine Gruppe darstellt mit einer Gruppe, ausgewählt aus der Gruppe bestehend aus -⁺N(R)₄, -SO₃⁻, -COO⁻, -PO₃²⁻ und -NR-CH₂-COO⁻ und einem Gegenion oder einer Alkylenoxidgruppe -{O(CH₂)ₓ}_{y}-R¹; R^{t} eine Hydroxygruppe oder eine Alkoxygruppe darstellt; und gewellte Linien jeweils eine Bindungsposition mit einer Carbonylgruppe in Formel 1-3 oder Formel 2-3 darstellen.

14. Wasserlöslicher Photopolymerisationsinitiator nach Anspruch 12, wobei R³ und R⁴ jeweils unabhängig eine Alkylgruppe mit 1 bis 8 Kohlenstoffatomen, eine Arylgruppe mit 6 bis 20 Kohlenstoffatomen oder eine Alkoxygruppe mit 1 bis 4 Kohlenstoffatomen darstellen.

## Revendications

1. Composition durcissable aqueuse, comprenant :
un initiateur de photopolymérisation hydrosoluble présentant une structure où un ou plusieurs groupes carbonyle se lient en outre directement sur un noyau aromatique d'un groupe acyle aromatique, lequel se lie sur un atome de phosphore dans une structure d'oxyde d'acylphosphine ;
de l'eau, et
un composé polymérisable.

2. Composition durcissable aqueuse selon la revendication 1, dans laquelle l'initiateur de photopolymérisation hydrosoluble présente un groupe non ionique ou un groupe ionique sélectionné parmi le groupe consistant en un groupe ammonium, un groupe acide sulfonique, un groupe acide carboxylique, un groupe acide phosphonique, un groupe phosphinique, et des sels de ceux-ci.

3. Composition durcissable aqueuse selon la revendication 1 ou 2, dans laquelle l'initiateur de photopolymérisation hydrosoluble est un composé présentant une structure partielle représentée par la formule 1 ou la formule 2 ci-dessous : 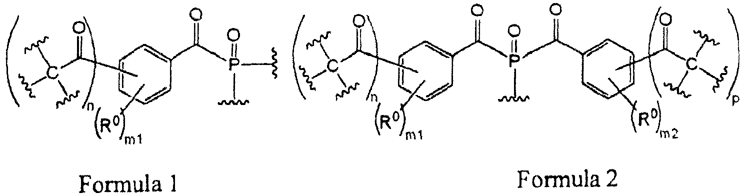 où R⁰ représente à chaque fois indépendamment un groupe alkyle, un groupe aryle, ou un groupe alkoxy ; m1 représente à chaque fois indépendamment un entier de 0 à 4 ; m2 représente un entier de 0 à 5 ; n représente à chaque fois indépendamment un entier de 1 à 3 ; p représente un entier de 0 à 3, et les lignes ondulées représentent chacune une position de liaison avec une autre structure.

4. Composition durcissable aqueuse selon l'une quelconque des revendications 1 à 3,
dans laquelle l'initiateur de photopolymérisation hydrosoluble est un composé représenté par la formule 1-1 ou la formule 2-1 ci-dessous : 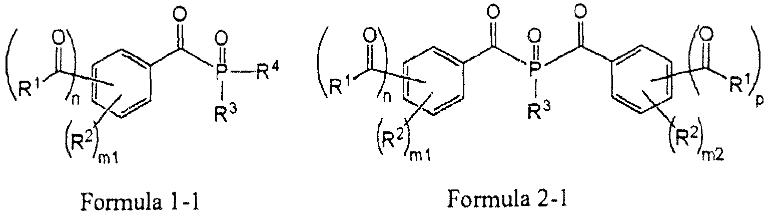 où R¹ représente à chaque fois indépendamment un groupe, lequel présente un ou plusieurs groupes sélectionnés parmi le groupe consistant en -⁺N(R)4, -SO₃⁻, -COO⁻, -PO3²⁻, et un groupe oxyde d'alkylène -{(CH₂)ₓO}_{y}-, et lequel présente un atome de carbone se liant sur un groupe carbonyle dans la formule 1-1 ou la formule 2-1 ; R représente un atome d'hydrogène, un groupe alkyle, un groupe phényle, ou un groupe aralkyle ; x représente un entier de 2 à 6 ; y représente un entier de 3 à 500 ; R² à R⁴ représentent à chaque fois indépendamment un groupe alkyle, un groupe aryle, ou un groupe alkoxy ; m1 représente à chaque fois indépendamment un entier de 0 à 4 ; m2 représente un entier de 0 à 5 ; n représente à chaque fois indépendamment un entier de 1 à 3, et p représente un entier de 0 à 3.

5. Composition durcissable aqueuse selon l'une quelconque des revendications 1 à 4,
dans laquelle l'initiateur de photopolymérisation hydrosoluble est un composé représenté par la formule 1-2 ou la formule 2-2 ci-dessous : 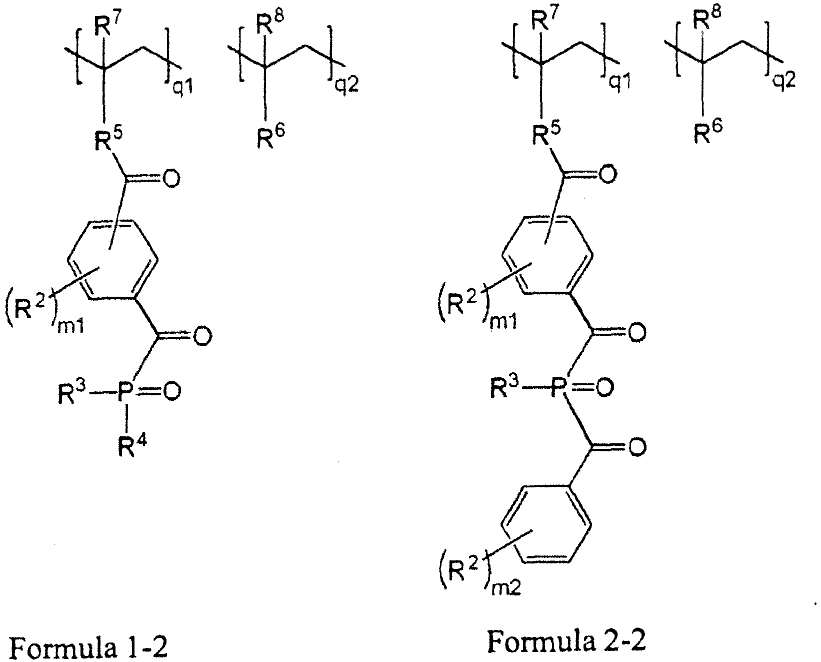 où R² à R⁴ représentent à chaque fois indépendamment un groupe alkyle, un groupe aryle, ou un groupe alkoxy ; R⁵ représente à chaque fois indépendamment une liaison simple ou un groupe de liaison divalent, lequel se lie sur une chaîne principale polymère et présente un atome de carbone se liant sur un groupe carbonyle dans la formule 1-2 ou la formule 2-2 ; R⁶ représente à chaque fois indépendamment un groupe présentant un ou plusieurs groupes sélectionnés parmi le groupe consistant en -⁺N(R)₄, -SO₃⁻, -COO⁻, -PO₃²⁻, et un groupe oxyde d'alkylène -{(CH₂)ₓO}_{y}- ; R représente un atome d'hydrogène, un groupe alkyle, un groupe phényle, ou un groupe aralkyle ; R⁷ et R⁸ représentent à chaque fois indépendamment un atome d'hydrogène ou un groupe alkyle ; x représente un entier de 2 à 6 ; y représente un entier de 3 à 500 ; m1 représente à chaque fois indépendamment un entier de 0 à 4 ; m2 représente un entier de 0 à 5, et q1 et q2 représentent un rapport molaire.

6. Composition durcissable aqueuse selon l'une quelconque des revendications 1 à 5, dans laquelle une teneur de l'initiateur de photopolymérisation hydrosoluble s'étend de 0,1 à 40,0 % en masse par rapport à une masse totale du composé polymérisable inclus dans la composition durcissable aqueuse.

7. Composition durcissable aqueuse selon l'une quelconque des revendications 1 à 6, dans laquelle une teneur de l'eau s'étend de 19 à 90 % en masse par rapport à une masse totale de la composition durcissable aqueuse.

8. Composition durcissable aqueuse selon l'une quelconque des revendications 1 à 7, dans laquelle le composé polymérisable est un composé hydrosoluble.

9. Composition durcissable aqueuse selon l'une quelconque des revendications 1 à 8, comprenant en outre un colorant.

10. Composition durcissable aqueuse selon l'une quelconque des revendications 1 à 9, dans laquelle la composition durcissable aqueuse est une composition d'encre aqueuse pour jet d'encre.

11. Composition durcissable aqueuse selon la revendication 4, dans laquelle R³ et R⁴ représentent à chaque fois indépendamment un groupe alkyle présentant de 1 à 8 atomes de carbone, un groupe aryle présentant de 6 à 20 atomes de carbone, ou un groupe alkoxy présentant de 1 à 4 atomes de carbone,

12. Initiateur de photopolymérisation hydrosoluble comprenant un composé représenté par la formule 1-1 ou la formule 2-1 ci-dessous : 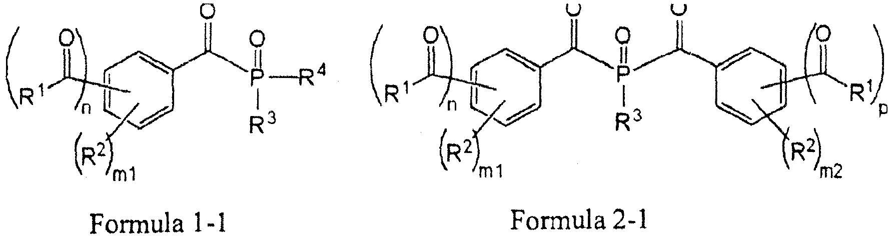 où R¹ représente à chaque fois indépendamment un groupe, lequel présente un ou plusieurs groupes sélectionnés parmi le groupe consistant en -⁺N(R)₄, -SO₃⁻, -COO⁻, -PO₃²⁻ et un groupe oxyde d'alkylène -{(CH₂)ₓO}_{y}-, et lequel présente un atome de carbone se liant sur un groupe carbonyle dans la formule 1-1 ou la formule 2-1 ; R représente un atome d'hydrogène, un groupe alkyle, un groupe phényle, ou un groupe aralkyle ; x représente un entier de 2 à 6 ; y représente un entier de 3 à 500 ; R² à R⁴ représentent à chaque fois indépendamment un groupe alkyle, un groupe aryle, ou un groupe alkoxy ; m1 représente à chaque fois indépendamment un entier de 0 à 4 ; m2 représente un entier de 0 à 5 ; n représente à chaque fois indépendamment un entier de 1 à 3, et p représente un entier de 0 à 3.

13. Initiateur de photopolymérisation hydrosoluble selon la revendication 12, dans lequel l'initiateur de photopolymérisation hydrosoluble est un composé représenté par la formule 1-2, la formule 2-2, la formule 1-3, ou la formule 2-3 ci-dessous : 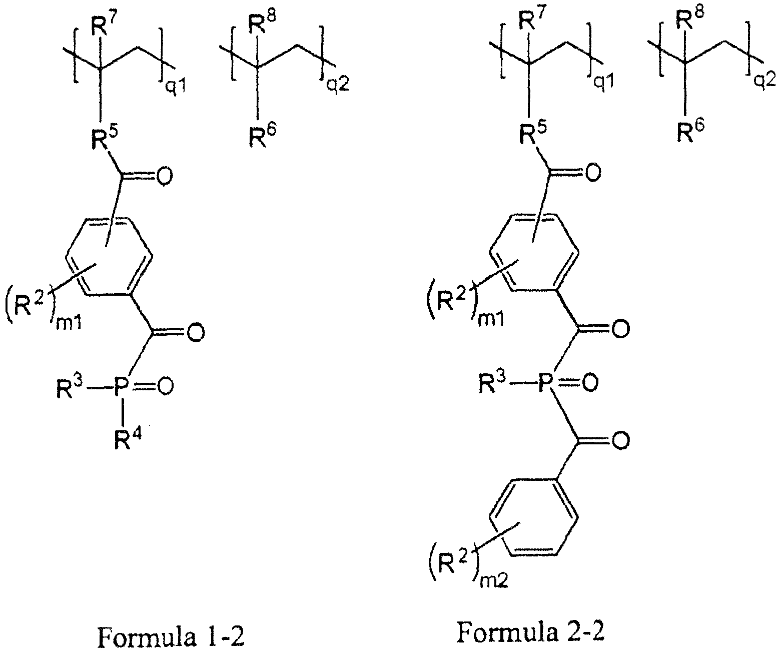 où R² à R⁴ représentent à chaque fois indépendamment un groupe alkyle, un groupe aryle, ou un groupe alkoxy ; R⁵ représente à chaque fois indépendamment une liaison simple ou un groupe de liaison divalent, lequel se lie sur une chaîne principale polymère et présente un atome de carbone se liant sur un groupe carbonyle dans la formule 1-2 ou la formule 2-2 ; R⁶ représente à chaque fois indépendamment un groupe présentant un ou plusieurs groupes sélectionnés parmi le groupe consistant en -⁺N(R)₄, -SO₃⁻, -COO⁻, -PO₃²⁻, et un groupe oxyde d'alkylène -{(CH₂)ₓO}_{y}- ; R représente un atome d'hydrogène, un groupe alkyle, un groupe phényle, ou un groupe aralkyle ; R⁷ et R⁸ représentent à chaque fois indépendamment un atome d'hydrogène ou un groupe alkyle ; x représente un entier de 2 à 6 ; y représente un entier de 3 à 500 ; m1 représente à chaque fois indépendamment un entier de 0 à 4 ; m2 représente un entier de 0 à 5, et q1 et q2 représentent un rapport molaire ; 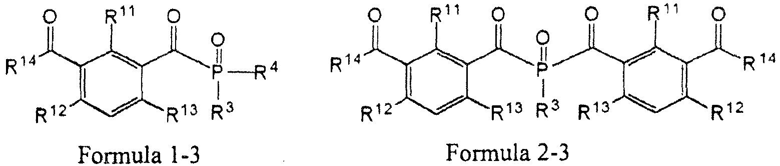 R³ et R⁴ représentent à chaque fois indépendamment un groupe alkyle, un groupe aryle, ou un groupe alkoxy ; R¹¹ à R¹³ représentent à chaque fois indépendamment un groupe alkyle présentant de 1 à 8 atomes de carbone, un groupe aryle présentant de 6 à 20 atomes de carbone, ou un groupe alkoxy présentant de 1 à 4 atomes de carbone, et R¹⁴ représente à chaque fois indépendamment un groupe représenté par la formule R¹-1 ci-dessous : 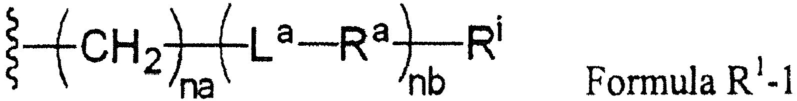 où na représente 1 ou 2 ; nb représente 0 ou 1 ; L^{a} représente une liaison éther, une liaison ester, ou une liaison thioéther ; R^{a} représente un groupe alkylène présentant de 1 à 10 atomes de carbone, Rⁱ représente un groupe présentant un groupe sélectionné parmi le groupe consistant en -⁺N(R)₄, -SO₃⁻, -COO⁻, -PO₃²⁻, et -NR-CH₂-COO⁻, et un contre-ion ou un groupe oxyde d'alkylène -{(CH₂)ₓO}_{y}-R^{t} ; R'représente un atome hydroxy ou un groupe alkoxy, et les lignes ondulées représentent chacune une position de liaison avec un groupe carbonyle dans la formule 1-3 ou la formule 2-3.

14. Initiateur de photopolymérisation hydrosoluble selon la revendication 12, dans lequel R³ et R⁴ représentent à chaque fois indépendamment un groupe alkyle présentant de 1 à 8 atomes de carbone, un groupe aryle présentant de 6 à 20 atomes de carbone, ou un groupe alkoxy présentant de 1 à 4 atomes de carbone.
